# EUROPEAN PATENT APPLICATION

(11) **EP 4 609 690 A1**
(43) Date of publication of application: **03.09.2025**
(21) Application number: 23917099.6
(22) Date of filing: 18.10.2023
(51) Int. Cl.: A01D 34/64, A01D 34/82, A01D 67/00, A01D 67/04

(54) **RIDING LAWN MOWER**

(30) Priority: 17.01.2023 CN 202310082067; 17.01.2023 CN 202320116905 U; 17.01.2023 CN 202320116975 U; 18.01.2023 CN 202320117956 U; 18.01.2023 CN 202310076097; 18.01.2023 CN 202310089805
(71) Applicant: Nanjing Chervon Industry Co., Ltd., Nanjing, Jiangsu 211106 (CN)
(72) Inventor: LI, Li, Nanjing, Jiangsu 211106 (CN); GAO, Fan, Nanjing, Jiangsu 211106 (CN); GAO, Ming, Nanjing, Jiangsu 211106 (CN); ZHANG, Min, Nanjing, Jiangsu 211106 (CN); LIU, Runze, Nanjing, Jiangsu 211106 (CN); ZHANG, Tao, Nanjing, Jiangsu 211106 (CN); WEI, Tianfang, Nanjing, Jiangsu 211106 (CN)
(74) Representative: Sun, Yiming
(86) International application number: PCT/CN2023/125139
(87) International publication number: WO 2024/152631

(57) **Abstract**

A riding lawn mower includes a body (100), a seat (200), a chassis (300), a mowing element (400), a steering operation assembly (500), a power supply device (180), and a tool interface (610), where the seat (200) is configured for a user to sit on, the power supply device (180) is configured to provide a power supply to the riding lawn mower, the tool interface (610) is configured to be connected to an external power supply to charge the power supply device (180), and the tool interface (610) and at least part of the power supply device (180) are disposed on the front side of the seat (200).

## Description

This application claims priority to Chinese Patent Application No. 202310082067.3 filed with the China National Intellectual Property Administration (CNIPA) on Jan. 17, 2023, Chinese Patent Application No. 202320116905.X filed with the CNIPA on Jan. 17, 2023, Chinese Patent Application No. 202320116975.5 filed with the CNIPA on Jan. 17, 2023, Chinese Patent Application No. 202320117956.4 filed with the CNIPA on Jan. 18, 2023, Chinese Patent Application No. 202310076097.3 filed with the CNIPA on Jan. 18, 2023, and Chinese Patent Application No. 202310089805.7 filed with the CNIPA on Jan. 18, 2023, the disclosures of which are incorporated herein by reference in their entireties.

### TECHNICAL FIELD

The present application relates to a garden tool, for example, a riding lawn mower.

### BACKGROUND

As a garden tool, a riding lawn mower is widely used in the field of lawn and vegetation trimming. The riding lawn mower can use a rechargeable battery as a power source and has the advantages of little pollution, a low use cost, and the like. The rechargeable battery needs to be charged after its power is exhausted. For example, without detaching the battery, the battery is electrically connected to external mains electricity through a charging cable and then charged. Therefore, the riding lawn mower generally needs to be provided with a charging interface.

This part provides background information related to the present application, and the background information is not necessarily the existing art.

### SUMMARY

An object of the present application is to solve or at least alleviate part or all of the preceding problems. Therefore, an object of the present application is to provide a riding lawn mower with a good human-machine interaction function. The riding lawn mower has a tool interface that facilitates the plugging and unplugging of a user to charge a battery in the riding lawn mower, where the tool interface is disposed on the front side of a seat and close to a steering wheel and has a relatively good waterproof effect.

The present application provides a riding lawn mower. The riding lawn mower includes a seat for a user to sit on; a body supporting the seat; a chassis mounted to the body; a mowing element disposed at least partially in an accommodation space formed by the chassis; a steering operation assembly configured for the user to operate to control a turn of the riding lawn mower; a power supply device configured to provide a power supply to the riding lawn mower; and a tool interface configured to be connected to an external power supply to charge the power supply device. The tool interface and at least part of the power supply device are disposed on the front side of the seat.

In some examples, the riding lawn mower further includes a control panel, the body includes a front housing assembly, and the control panel and the steering operation assembly are disposed between the seat and the front housing assembly.

In some examples, the steering operation assembly includes a steering wheel configured for the user to operate to control a traveling direction of the riding lawn mower, and the distance L3 between the tool interface and a lowest point of the steering wheel in an up and down direction is greater than or equal to 0 and less than or equal to 2000 mm.

In some examples, the tool interface is disposed on a sidewall of the control panel.

In some examples, the tool interface includes a detachable sealing member, and the sealing member has waterproof and dustproof functions.

In some examples, the tool interface includes a charging interface and a communication interface.

In some examples, in the case where the tool interface is connected to an external electrical device, the power supply device is configured to charge the external electrical device.

In some examples, the riding lawn mower further includes a battery management circuit board connected to the power supply device and configured to control charge and discharge of the power supply device.

In some examples, the distance between the tool interface and the battery management circuit board in a front and rear direction is greater than or equal to 0 and less than or equal to 2000 mm.

In some examples, the riding lawn mower further includes an operating member configured to control the riding lawn mower to switch between a forward state and a reverse state.

In some examples, the operating member has an operating portion, and the distance L1 between the operating portion and a lowest point of a steering wheel in an up and down direction is greater than or equal to 0 and less than or equal to 1500 mm.

In some examples, the front housing assembly includes a rear surface facing the user, and the rear surface is formed with or connected to a storage device configured to store an article.

In some examples, the front housing assembly is further provided with a Universal Serial Bus (USB) interface electrically connected to the power supply device, and the power supply device is configured to charge an external electrical device externally connected to the USB interface.

In some examples, the distance between the USB interface and the bottom of the storage device is greater than or equal to 0 and less than or equal to 1000 mm.

In some examples, the power supply device includes at least two battery packs, each of which has energy of greater than or equal to 0.1 kW·h.

The present application provides a riding lawn mower. The riding lawn mower includes a seat for a user to sit on; a body supporting the seat; a chassis mounted to the body; a mowing element disposed at least partially in an accommodation space formed by the chassis; a steering operation assembly including a steering wheel configured for the user to operate to control a turn of the riding lawn mower; a power supply device disposed at least partially on the front side of the seat and configured to provide a power supply to the riding lawn mower; and a tool interface configured to be connected to an external power supply to charge the power supply device. The distance L3 between the tool interface and a lowest point of the steering wheel in an up and down direction is greater than or equal to 0 and less than or equal to 2000 mm.

In some examples, the distance L3 between the tool interface and the lowest point of the steering wheel in the up and down direction is greater than or equal to 500 mm and less than or equal to 1500 mm.

In some examples, the riding lawn mower further includes a control panel, where the tool interface is disposed on a sidewall of the control panel.

The present application provides a riding lawn mower. The riding lawn mower includes a seat for a user to sit on; a body supporting the seat; a chassis mounted to the body; a mowing element disposed at least partially in an accommodation space formed by the chassis; an operating member configured to control the riding lawn mower to switch between a forward state and a reverse state; a power supply device configured to provide a power supply to the riding lawn mower; and a tool interface configured to be connected to an external power supply to charge the power supply device. The tool interface and the operating member are disposed on the front side of the seat; and in an up and down direction, the tool interface is disposed below the operating member.

In some examples, the tool interface includes a detachable sealing member, and the sealing member has waterproof and dustproof functions.

### BRIEF DESCRIPTION OF DRAWINGS

FIG. 1 is a view illustrating the structure of a riding lawn mower according to an example of the present application from an angle.
FIG. 2 is a view illustrating the structure of a riding lawn mower according to an example of the present application from another angle.
FIG. 3 is a left view of a riding lawn mower according to an example of the present application.
FIG. 4 is a right view of a riding lawn mower according to an example of the present application.
FIG. 5 is a top view of a riding lawn mower according to an example of the present application.
FIG. 6 is an exploded view of a riding lawn mower according to an example of the present application.
FIG. 7 is an exploded view of part of the structure of a riding lawn mower according to an example of the present application.
FIG. 8 is a first sectional view of the structure shown in FIG. 7.
FIG. 9 is a second sectional view of the structure shown in FIG. 7.
FIG. 10 is an enlarged view of part A of FIG. 1.
FIG. 11 is a schematic view of a steering wheel, an operating member, an eccentric roller, a first microswitch, and a second microswitch of a riding lawn mower according to an example of the present application.
FIG. 12 is a schematic view of an operating member, an eccentric roller, a first microswitch, a second microswitch, a limiting pin, and an elastic member of a riding lawn mower according to an example of the present application.
FIG. 13 is view one illustrating the structure of a riding lawn mower according to an example of the present application.
FIG. 14 is view two illustrating the structure of a riding lawn mower according to an example of the present application.
FIG. 15 is view three illustrating the structure of a riding lawn mower according to an example of the present application.
FIG. 16 is view one illustrating part of the structure of a riding lawn mower according to an example of the present application.
FIG. 17 is view one illustrating part of the structures of a brake mechanism and a parking assembly according to an example of the present application.
FIG. 18 is view two illustrating part of the structures of a brake mechanism and a parking assembly according to an example of the present application.
FIG. 19 is view three illustrating part of the structures of a brake mechanism and a parking assembly according to an example of the present application.
FIG. 20 is view one illustrating part of the structure of a parking assembly according to an example of the present application.
FIG. 21 is view two illustrating part of the structure of a parking assembly according to an example of the present application.
FIG. 22 is view three illustrating part of the structure of a parking assembly according to an example of the present application.
FIG. 23 is view four illustrating part of the structures of a brake mechanism and a parking assembly according to an example of the present application.
FIG. 24 is a partial structural view of FIG. 23.
FIG. 25 is view two illustrating part of the structure of a riding lawn mower according to an example of the present application.
FIG. 26 is a partial structural view of FIG. 25.
FIG. 27 is view one illustrating that a steering mechanism is connected to a frame according to an example of the present application.
FIG. 28 is view two illustrating that a steering mechanism is connected to a frame according to an example of the present application.
FIG. 29 is an exploded view one illustrating part of the structure of a steering mechanism according to an example of the present application.
FIG. 30 is an exploded view two illustrating part of the structure of a steering mechanism according to an example of the present application.
FIG. 31 is a view illustrating that a cutting assembly, a height adjustment assembly, and a throttle assembly are connected to a frame according to an example of the present application.
FIG. 32 is a front view illustrating that a cutting assembly, a height adjustment assembly, and a throttle assembly are connected to a frame according to an example of the present application.
FIG. 33 is a view illustrating that a cutting assembly and a height adjustment assembly are connected to a frame according to an example of the present application.
FIG. 34 is a partial structural view one of FIG. 33.
FIG. 35 is a partial structural view two of FIG. 33.
FIG. 36 is an exploded view of a control assembly according to an example of the present application.
FIG. 37 is a partial structural view of FIG. 36.
FIG. 38 is an exploded view of FIG. 37.
FIG. 39 is a partial structural view of FIG. 38.

### DETAILED DESCRIPTION

Before any examples of this application are explained in detail, it is to be understood that this application is not limited to its application to the structural details and the arrangement of components set forth in the following description or illustrated in the above drawings.

In this application, the terms "comprising", "including", "having" or any other variation thereof are intended to cover an inclusive inclusion such that a process, method, article or device comprising a series of elements includes not only those series of elements, but also other elements not expressly listed, or elements inherent in the process, method, article, or device. Without further limitations, an element defined by the phrase "comprising a ..." does not preclude the presence of additional identical elements in the process, method, article, or device comprising that element.

In this application, the term "and/or" is a kind of association relationship describing the relationship between associated objects, which means that there can be three kinds of relationships. For example, A and/or B can indicate that A exists alone, A and B exist simultaneously, and B exists alone. In addition, the character "/" in this application generally indicates that the contextual associated objects belong to an "and/or" relationship.

In this application, the terms "connection", "combination", "coupling" and "installation" may be direct connection, combination, coupling or installation, and may also be indirect connection, combination, coupling or installation. Among them, for example, direct connection means that two members or assemblies are connected together without intermediaries, and indirect connection means that two members or assemblies are respectively connected with at least one intermediate members and the two members or assemblies are connected by the at least one intermediate members. In addition, "connection" and "coupling" are not limited to physical or mechanical connections or couplings, and may include electrical connections or couplings.

In this application, it is to be understood by those skilled in the art that a relative term (such as "about", "approximately", and "substantially") used in conjunction with quantity or condition includes a stated value and has a meaning dictated by the context. For example, the relative term includes at least a degree of error associated with the measurement of a particular value, a tolerance caused by manufacturing, assembly, and use associated with the particular value, and the like. Such relative term should also be considered as disclosing the range defined by the absolute values of the two endpoints. The relative term may refer to plus or minus of a certain percentage (such as 1%, 5%, 10%, or more) of an indicated value. A value that did not use the relative term should also be disclosed as a particular value with a tolerance. In addition, "substantially" when expressing a relative angular position relationship (for example, substantially parallel, substantially perpendicular), may refer to adding or subtracting a certain degree (such as 1 degree, 5 degrees, 10 degrees or more) to the indicated angle.

In this application, those skilled in the art will understand that a function performed by an assembly may be performed by one assembly, multiple assemblies, one member, or multiple members. Likewise, a function performed by a member may be performed by one member, an assembly, or a combination of members.

In this application, the terms "up", "down", "left", "right", "front", and "rear" and other directional words are described based on the orientation or positional relationship shown in the drawings, and should not be understood as limitations to the examples of this application. In addition, in this context, it also needs to be understood that when it is mentioned that an element is connected "above" or "under" another element, it can not only be directly connected "above" or "under" the other element, but can also be indirectly connected "above" or "under" the other element through an intermediate element. It should also be understood that orientation words such as upper side, lower side, left side, right side, front side, and rear side do not only represent perfect orientations, but can also be understood as lateral orientations. For example, lower side may include directly below, bottom left, bottom right, front bottom, and rear bottom.

In this application, the terms "controller", "processor", "central processor", "CPU" and "MCU" are interchangeable. Where a unit "controller", "processor", "central processing", "CPU", or "MCU" is used to perform a specific function, the specific function may be implemented by a single aforementioned unit or a plurality of the aforementioned unit.

In this application, the term "device", "module" or "unit" may be implemented in the form of hardware or software to achieve specific functions.

In this application, the terms "computing", "judging", "controlling", "determining", "recognizing" and the like refer to the operations and processes of a computer system or similar electronic computing device (e.g., controller, processor, etc.).

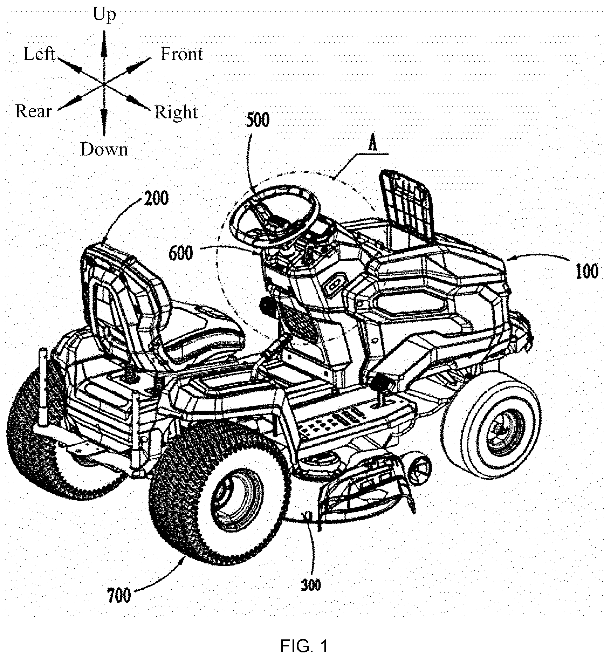

The present application provides a riding lawn mower which a user can control in a riding manner to perform mowing. As shown in FIGS. 1 to 6, the riding lawn mower includes a body 100, a seat 200, a chassis 300, a mowing assembly, a steering operation assembly 500, a power supply device 180, a control panel 600, a walking assembly 700, and an illumination assembly. The seat 200 is configured for the user to sit on. The body 100 can support the seat 200, and the chassis 300 is mounted below the body 100. The mowing assembly includes a mowing element 400 rotatable to perform mowing, and at least part of the mowing assembly is disposed in an accommodation space formed by the chassis 300. The steering operation assembly 500 is for the user to operate to control a turn of the riding lawn mower, and the steering operation assembly 500 includes a steering wheel 510 operable by the user to control a traveling direction of the riding lawn mower. The power supply device 180 is configured to provide a power supply to the riding lawn mower so that all electronic components included in the riding lawn mower can operate properly. The walking assembly 700 is connected to the body 100 and can act, for example, turn, travel straight, park, and reverse under the control of the user. The riding lawn mower is movable so that the mowing assembly can move in a target region to complete continuous mowing. The illumination assembly is configured to improve the visibility of a working environment of the riding lawn mower.

The body 100 is a main support and mounting component of the riding lawn mower. The seat 200, the chassis 300, the mowing element 400, the steering operation assembly 500, the power supply device 180, the control panel 600, the walking assembly 700, and the illumination assembly are all mounted to the body 100. The body 100 includes a frame 130 and a housing covering the frame 130, and the frame 130 is a frame structure into which several crossmembers and several rails are assembled in a set shape.

The frame 130 includes a first mounting portion and a second mounting portion. Along a forward direction of the riding lawn mower, the first mounting portion is disposed on the front side of the second mounting portion, the first mounting portion is used for mounting structures such as the steering operation assembly 500, the control panel 600, and a battery mounting frame, and the second mounting portion is used for mounting the seat 200. A riding space is formed between the first mounting portion and the second mounting portion of the frame 130, and the user can enter the riding space and ride the riding lawn mower. The chassis 300 is mounted below the frame 130, and the mowing element 400 is mounted to the chassis 300. The walking assembly 700 includes a walking motor, a transmission mechanism, front wheels 710, and rear wheels 720, the walking motor is powered by the power supply device 180, and the walking motor can drive the rotation of the front wheels 710 or the rear wheels 720 through the transmission mechanism.

The housing covers the frame 130 as an exterior part, and the housing can not only protect the frame 130 but also improve the aesthetics of the whole riding lawn mower. In some examples, the housing includes a front housing assembly 110 and a rear frame assembly 120, the front housing assembly 110 covers the first mounting portion of the frame 130, and the rear housing assembly 120 covers the second mounting portion of the frame 130.

In some examples, the rear housing assembly 120 may include only one rear cover, and the integrally formed rear cover is mounted to the frame 130 with high efficiency. In some examples, the rear housing assembly 120 may include multiple rear covers, and the rear housing assembly 120 is split so that each rear cover is manufactured with reduced difficulty, and the rear housing assembly 120 can be more aesthetic in shape. In some examples, the rear cover is a plastic part, which is low in cost and easy to shape. In some parallel examples, the rear cover is a combination of a sheet metal part and a plastic part, with the cost and structural strength considered. In some more specific examples, the rear wheels 720 are disposed beyond the rear cover to protect the rear housing assembly 120.

In some examples, the riding lawn mower further includes a support portion configured to support the user, and the front housing assembly 110 is disposed at least partially on the front side of the support portion. In some examples, the support portion includes the seat 200. The seat 200 has an L-shaped structure and includes a cushion and a backrest that are almost perpendicular to each other, and the backrest can support the waist of the user, helping to improve the riding experience of the user and achieving relatively high safety. The cushion is recessed inward, that is, the middle of the cushion is lower than edges of the cushion so that the buttocks of the user can be sunk into the cushion, and the user can not only be prevented from accidentally slipping off the seat 200 but also sit more comfortably. In some examples, the support portion includes a platform for the user to stand on, and the user stands on the platform to operate the riding lawn mower.

The front housing assembly 110 is a partial surrounding structure into which multiple plates are spliced, and the split front housing assembly 110 has the advantages of a low cost, easy assembly, variability and aesthetics in shape, and the like. The front housing assembly 110 includes a battery hatch 111, a left cover 112, a right cover 113, and a fascia 114. The left cover 112 and the right cover 113 may each be a plastic part or a sheet metal part. In some examples, the left cover 112 and the right cover 113 are basically the same in shape. In some examples, the left cover 112 and the right cover 113 are each an L-shaped plate, the left cover 112 covers the first mounting portion of the frame 130 from the left side of the body 100, the right cover 113 covers the first mounting portion of the frame 130 from the right side of the body 100, and small plates on the left cover 112 and the right cover 113 are disposed at the front end of the frame 130 and spliced into a mounting portion for mounting the fascia 114. The fascia 114 is detachably connected to the mounting portion. The fascia 114 is disposed separately, which is convenient to assemble and more aesthetic. The fascia 114 may be made of a sheet metal or plastic.

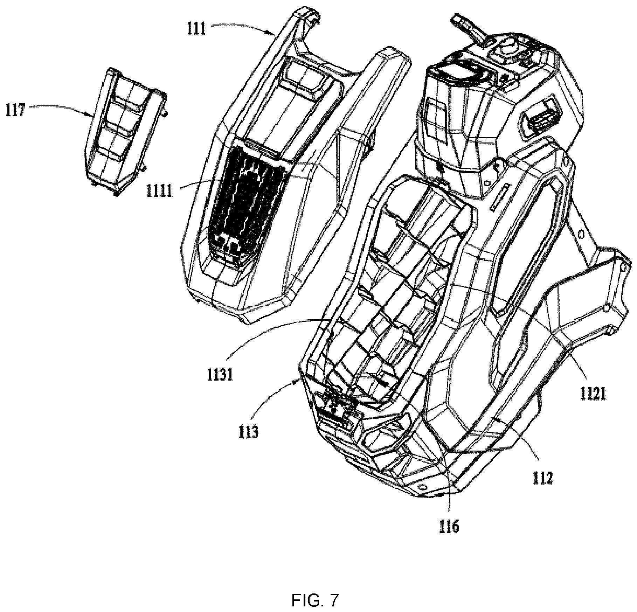

Referring to FIG. 7, after the left cover 112 and the right cover 113 are mounted to the left and right sides of the first mounting portion, a battery compartment 116 opened basically upward is formed between the left cover 112, the right cover 113, and the first mounting portion, and the power supply device 180 is disposed in the battery compartment 116. In some examples, at least part of the power supply device 180 is located on the front side of the seat 200 in an extension direction of the body 100. In some examples, the power supply device 180 includes at least one battery pack, where one, two, or more battery packs may be disposed as required. In some examples, the energy of one battery pack is greater than or equal to 0.1 kW·h. In some examples, the energy of one battery pack is greater than or equal to 2 kW·h. In some examples, the battery pack may be a lithium battery. In some examples, the battery pack may be a lithium iron phosphate battery. To fix the position of the battery pack to prevent the battery pack from shaking and damages due to collisions, the battery mounting frame configured to fix the battery pack is also disposed in the battery compartment 116. In some examples, the battery mounting frame is in the shape of grids, and different battery packs are sequentially mounted into different grids of the battery mounting frame so that the stability of the battery pack can be improved, helping to increase the service life of the battery pack.

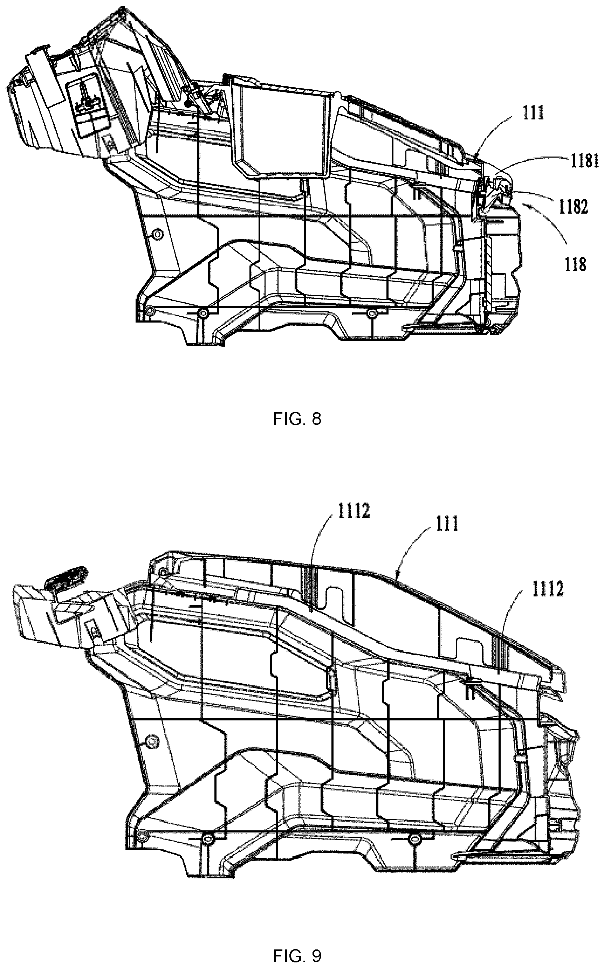

In some examples, referring to FIG. 8, the battery hatch 111 covers an opening of the battery compartment 116 to protect the battery pack in the battery compartment 116. In some examples, an end of the battery hatch 111 is rotatably connected to the left cover 112 and the right cover 113, and the other end of the battery hatch 111 is provided with a latch structure 118. The latch structure 118 enables the battery hatch 111 to be engaged with the whole structure formed by the left cover 112 and the right cover 113.

The latch structure 118 includes a fixing member 1181 and a hook 1182, an end of the fixing member 1181 is fixedly connected to the other end of the battery hatch 111, an end of the hook 1182 is rotatably connected to an end of the fixing member 1181 facing away from the battery hatch 111, the hook 1182 is provided with a hook portion and a hand clasp, and the hook portion can be fastened to a protrusion formed on the mounting portion. The user applies a force to the hand clasp to rotate the hook 1182 so that the hook portion of the hook 1182 is disengaged from the protrusion to complete unlocking. The user continues to apply a force to rotate the hand clasp and can pull the latch structure 118 to lift the battery hatch 111, thereby opening the battery compartment 116.

In some examples, an elastic reset is provided between the fixing member 1181 and the hook 1182. When the hook 1182 moves towards the fixing member 1181, the elastic reset can be compressed. When the hook 1182 needs to be engaged with the protrusion, the elastic reset can provide a certain driving force to reset the hook 1182, thereby improving the efficiency and strength of engagement. To avoid excessive noise due to a collision when the battery hatch 111 closes the opening of the battery compartment 116, a mute pad is provided on a downward side of the battery hatch 111. Optionally, the mute pad is a rubber pad.

Referring to FIG. 7, a left skirt 1121 protrudes from the top of the left cover 112, a right skirt 1131 protrudes from the top of the right cover 113, and the left skirt 1121 and the right skirt 1131 form a first waterproof skirt that is annular. The battery hatch 111 is provided with a flange along a circumferential direction. After the battery hatch 111 covers the opening of the battery compartment 116, the flange of the battery hatch 111 abuts against the first waterproof skirt from the outer side of the first waterproof skirt, thereby achieving a waterproof effect, preventing rain or other liquids from entering the battery compartment 116 through the opening of the battery compartment 116, and thus avoiding damages to the battery pack.

To make the flange of the battery hatch 111 butt with the first waterproof skirt smoothly and with high accuracy, as shown in FIG. 9, the battery hatch 111 is provided with guide protrusions 1112, the left cover 112 and the right cover 113 are provided with guide grooves, and the guide protrusions 1112 move within the guide grooves to guide the movement of the battery hatch 111. In some examples, the guide protrusions 1112 and the guide grooves are provided in multiple groups to further improve the guide effect.

Still referring to FIG. 7, a heat dissipation see-through hole 1111 penetrates through the battery hatch 111 along a thickness direction. The heat dissipation see-through hole 1111 can not only smoothly dissipate heat generated by the battery pack during operation but also make it convenient for the user to observe the inside of the battery compartment 116, for example, observe a power indicator light of the battery pack in the battery compartment 116. In some more specific examples, multiple heat dissipation see-through holes 1111 are provided. The multiple heat dissipation see-through holes 1111 may be arranged regularly on the battery hatch 111, for example, arranged in rows and columns or in cycles, or the multiple heat dissipation see-through holes 1111 may be arranged irregularly, for example, arranged in a letter, number, or Chinese character.

In some examples, the battery hatch 111 is an opaque part. For example, the battery hatch 111 is a colored plastic part which can avoid damages to the battery pack due to direct sunlight on the battery pack. In some examples, the front housing assembly 110 further includes a transparent cover 117, and the transparent cover 117 is disposed directly above the heat dissipation see-through holes 1111 and detachably connected to the battery hatch 111, thereby preventing rain, dust, or other foreign matters from entering the battery compartment 116 through the heat dissipation see-through holes 1111.

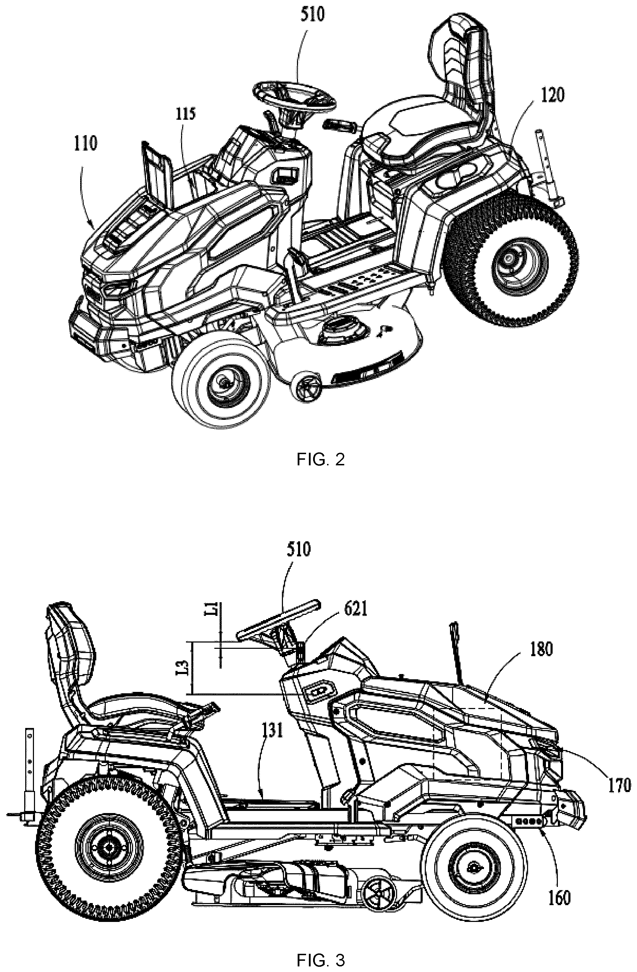

Still referring to FIGS. 2 and 7, a storage bin 115 is also formed between the left cover 112, the right cover 113, and the first mounting portion, and along the forward direction of the riding lawn mower, the storage bin 115 is disposed on the rear side of the battery compartment 116. The user may place some maintenance tools, protective devices, and the like in the storage bin 115. The battery hatch 111 is further provided with an opening directly facing the storage bin 115, and a storage bin cover is rotatably connected to the battery hatch 111 and can be rotated to open or close the storage bin 115.

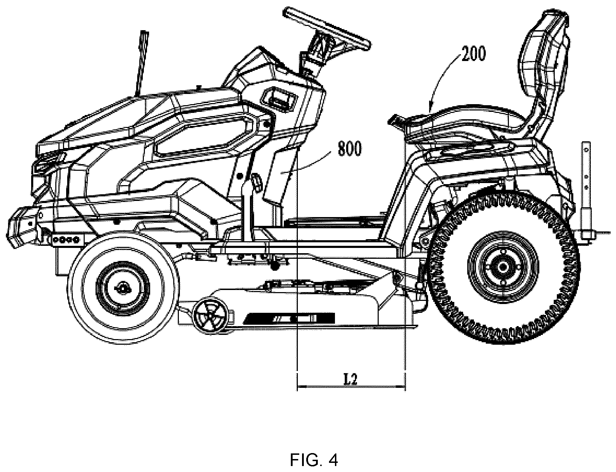

In some examples, still referring to FIGS. 3 and 4, a snow shovel interface 160 is further provided at the front end of the front housing assembly 110, and the snow shovel interface 160 enables a snow shovel accessory to be assembled to the riding lawn mower so that the riding lawn mower can perform snow removal. In some examples, the snow shovel interface is an insertion interface. In some examples, the snow shovel interface is a connector mounting port.

In some examples, still referring to FIGS. 3 and 4, an illumination light 170 is further provided at the front end of the front housing assembly 110, and an illumination button on the control panel 600 is pressed to control the illumination light 170 to be on or off, to improve the visibility of the working environment of the riding lawn mower. The intensity, irradiation range, and angle of the illumination light 170 are all configured to be adjustable as required, thereby improving the illumination effect. In some specific examples, the efficiency of the illumination light 170 is less than 15 W to achieve the energy saving effect.

In some examples, the illumination light 170 includes a lampshade fixing plate, a transparent light plate, a light holder, a light plate, and screws. The illumination light 170 is mounted to the fascia 114 by the following steps: the lampshade fixing plate is connected to the fascia 114 by screws. The transparent light plate and the light holder form a whole by being limited by their own limiting posts and limiting holes. The transparent light plate and the light holder are fixed onto the lampshade fixing plate by screws. The light plate is positioned on the lampshade fixing plate through limiting posts and positioning grooves on the lampshade fixing plate and finally fixed by screws.

Still referring to FIGS. 3 and 4, the riding lawn mower further includes a pedal 131 disposed at an intermediate position of the frame 130, and the pedal 131 is configured for the user to step on. In some examples, the pedal 131 is a sheet metal part.

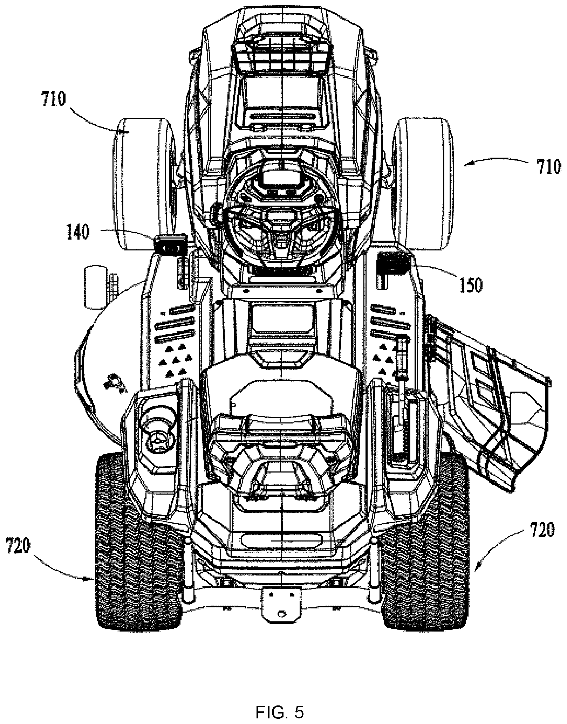

Still referring to FIG. 5, the riding lawn mower further includes a parking mechanism 140 and an acceleration mechanism 150. The parking mechanism 140 includes a parking member. In some examples, the parking member is a brake pedal, and the user may control the riding lawn mower to decelerate until a stop by stepping on the brake pedal. Optionally, the parking member may be disposed on the left side or right side of the pedal 131. The acceleration mechanism 150 includes an acceleration member. In some examples, the acceleration member is an acceleration pedal, and the user may control the riding lawn mower to accelerate by stepping on the acceleration pedal. Optionally, the acceleration member may be disposed on the left side or right side of the pedal 131. In some more specific examples, the parking mechanism 140 and the acceleration mechanism 150 are disposed on two sides of the control panel 600, thereby reducing the probability of an operation error of the user.

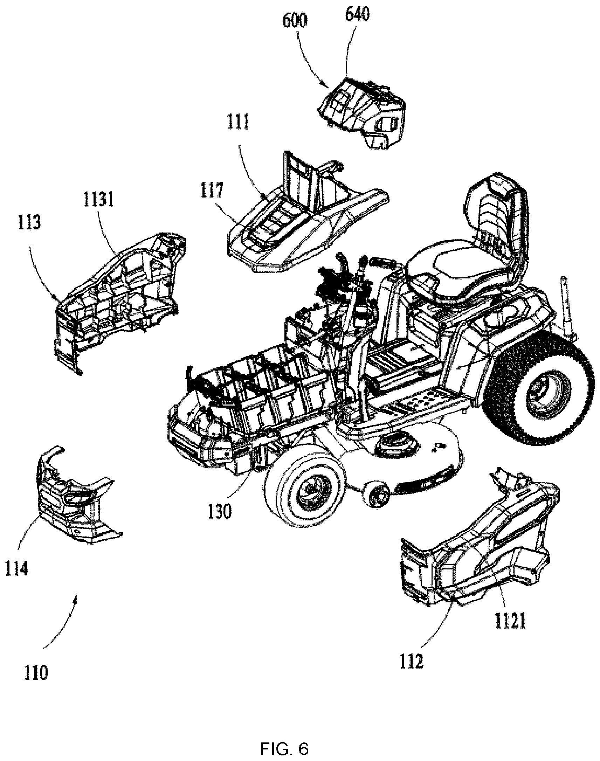

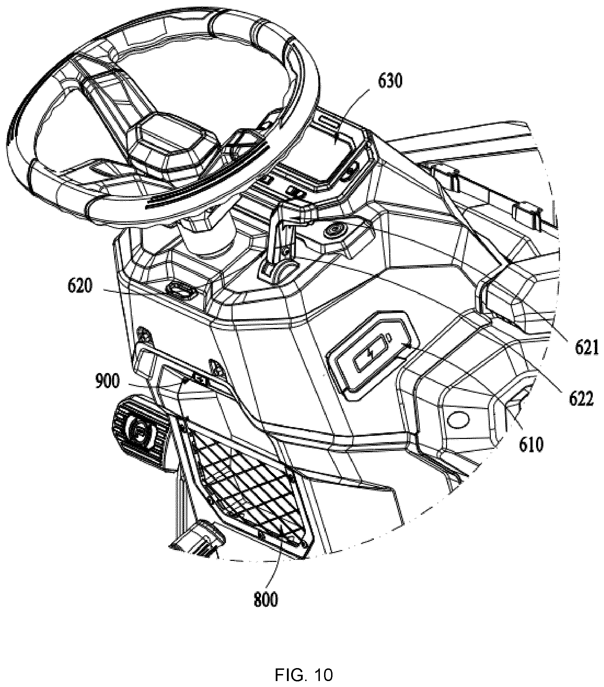

Still referring to FIGS. 6 and 10, the control panel 600 is mounted on the frame 130 through a center console mount, the center console mount is disposed behind the battery mounting frame, and the center console mount is higher than the battery hatch 111 so that the control panel 600 is located at a relatively high position to be convenient for the user to operate. Still referring to FIG. 6, the control panel 600 and the steering operation assembly 500 are disposed between the seat 200 and the front housing assembly 110, and the steering operation assembly 500 is disposed above the control panel 600 to be convenient for the user to operate.

In some examples, the housing further includes an upper housing assembly, the upper housing assembly includes a first housing and a second housing formed separately, the first housing and the second housing are spliced and surround the periphery of the control panel 600, and electronic elements are disposed on the inner side of a whole formed by the first housing and the second housing. The first housing includes a first edge, the second housing includes a second edge mating with the first edge, the second housing mates with the first edge at the second edge, and the first housing further includes an extension portion bent from the first edge towards the outer side of the whole, where the extension portion can abut against the top of the front housing assembly 110. The extension portion can not only shield a gap between the upper housing assembly and the front housing assembly 110 to achieve the waterproof effect but also improve the aesthetics of the whole housing.

A display screen 630, a cruise control button, a start key, a power takeoff (PTO) switch, a steering column, an operating member 620, and a keyhole are provided on the control panel 600. The display screen 630 is located at an upper middle position of the whole control panel 600 to be convenient for the user to observe. Still referring to FIG. 6, an annular second waterproof skirt 640 is provided at a position of the control panel 600 where the display screen 630 is mounted, and the display screen 630 is mounted within the second waterproof skirt 640 from top to bottom. The second waterproof skirt 640 can not only improve waterproof performance and prevent water from entering the control panel 600 through a gap between the display screen 630 and the control panel 600 to reduce the probability that an electronic component inside the control panel 600 is damaged but also provide positioning for the mounting of the display screen 630, which is conducive to improving assembly efficiency and accuracy.

The steering column is located at a lower middle position of the whole control panel 600, and the PTO switch and the operating member 620 are located on two sides of the steering column to be convenient for the user to operate. The keyhole is disposed directly opposite the steering column and located on a side of the steering column facing away from the display screen 630, making it convenient for the user to insert and remove a key. The cruise control button and the start key are located on two sides of the display screen 630, the cruise control button is disposed directly opposite the PTO switch, the start key is disposed directly opposite the operating member 620, and the start key and the operating member 620 are arranged on the same side of the steering column to be convenient for the user to operate. The electronic elements used in cooperation with the steering column, the PTO switch, the start key, and the cruise control button are disposed inside the control panel 600 so that the riding lawn mower can implement corresponding functions.

As shown in FIGS. 10 to 12, the operating member 620 is configured to control a traveling state of the riding lawn mower. The operating member 620 is rotatable about a first axis to a first position or a second position to control the riding lawn mower to switch between a forward state and a reverse state. In some examples, when the operating member 620 is at the first position, a controller of the riding lawn mower controls the riding lawn mower to walk forward; when the operating member 620 is at the second position, the controller controls the riding lawn mower to walk backward.

In some examples, the operating member 620 is also rotatable about the first axis to a third position. When the operating member 620 is at the third position, the controller of the riding lawn mower controls the riding lawn mower to stop traveling. The operating member 620 passes through the third position when switching between the first position and the second position.

In some examples, still referring to FIGS. 3 and 10, the operating member 620 includes an operating portion 621 operable by the user. The distance L1 between the operating portion 621 and a lowest point of the steering operation assembly 500 in an up and down direction is greater than or equal to 0 and less than or equal to 1500 mm. FIG. 3 shows only an example in which the operating member 620 is located below the steering wheel 510, and the above distance L1 should include the case where the operating member 620 is at least partially located above the lowest point of the steering wheel 510. In some examples, the operating member 620 is a lever having the operating portion 621 and a connecting portion 622, the operating portion 621 is configured for the user to hold to drive the operating member 620 to rotate about the first axis, and an end of the connecting portion 622 facing away from the operating portion 621 is rotatably connected to the control panel 600, where the axis of rotation is the first axis. In some examples, the distance L1 between the operating portion 621 and the lowest point of the steering operation assembly 500 in the up and down direction is greater than or equal to 0 and less than or equal to 500 mm. In some examples, the distance L1 between the operating portion 621 and the lowest point of the steering operation assembly 500 in the up and down direction is greater than or equal to 500 mm and less than or equal to 1000 mm. In some examples, the distance L1 between the operating portion 621 and the lowest point of the steering operation assembly 500 in the up and down direction is greater than or equal to 1000 mm and less than or equal to 1500 mm. The above distance between the operating portion 621 and the lowest point of the steering operation assembly 500 should be understood as the distance between a grip center of the operating portion 621 and the lowest point of the steering operation assembly 500. The lowest point of the steering operation assembly 500 should be understood as a lowest point of the steering operation assembly 500 in a lowest gear. The setting of the distance not only makes it convenient for the user to operate the steering operation assembly 500 and the operating member 620 but also avoids mutual interference between the steering operation assembly 500 and the operating member 620. In some examples, the operating member 620 has an L-shaped structure, and the operating portion 621 and the connecting portion 622 are perpendicular to each other. Of course, in some examples, the operating member 620 may be a button or key and also has the operating portion 621, where the operating portion 621 of the operating member 620 should be understood as an operation surface of the button or key.

In some examples, the riding lawn mower further includes a detection device configured to acquire a state of the operating member 620. The walking motor of the walking assembly 700 is electrically connected to the power supply device 180, the walking motor is configured to provide power for the walking of the riding lawn mower, and the controller of the riding lawn mower controls the operation of the walking motor based on the output of the detection device. In this example, the controller may be a centralized or distributed controller. For example, the controller may be one separate single-chip microcomputer or may be composed of multiple distributed single-chip microcomputers. The single-chip microcomputer can run control programs to control the walking motor to implement its functions.

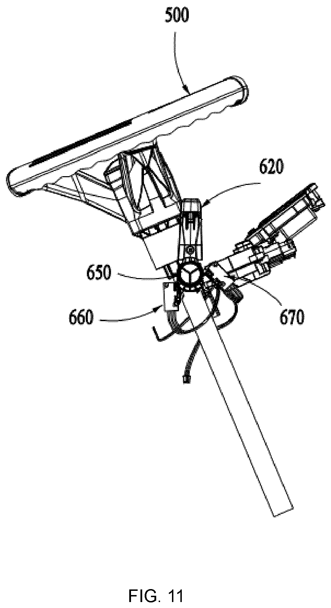

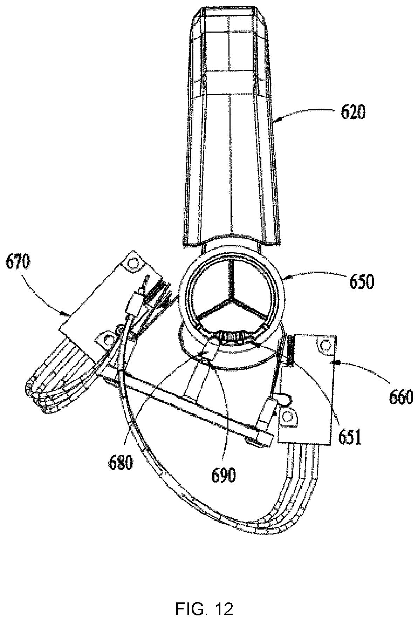

Referring to FIGS. 11 and 12, the detection device includes an eccentric roller 650, a first microswitch 660, and a second microswitch 670. The eccentric roller 650 is connected to the end of the connecting portion 622 of the operating member 620 facing away from the grip 621, and the first microswitch 660 and the second microswitch 670 are disposed on the front side and rear side of the eccentric roller 650, respectively. When the operating member 620 is rotated forward about the first axis, the eccentric roller 650 can rotate forward about a second axis to trigger the first microswitch 660, the first microswitch 660 may send a forward signal to the controller of the riding lawn mower, and the controller may control the walking motor to operate correspondingly. When the operating member 620 is rotated backward about the first axis, the eccentric roller 650 can rotate backward about the second axis to trigger the second microswitch 670, the second microswitch 670 may send a reverse signal to the controller of the riding lawn mower, and the controller may control the walking motor to operate correspondingly. When the eccentric roller 650 triggers neither the first microswitch 660 nor the second microswitch 670, it indicates that the operating member 620 is at the third position, and the controller controls the walking motor to stop operating to control the riding lawn mower to stop traveling.

In some examples, to limit the eccentric roller 650 to enable the operating member 620 to be stabilized at the first position, the second position, or the third position, as shown in FIG. 12, three limiting grooves 651 are provided on an outer peripheral surface of the eccentric roller 650, the three limiting grooves 651 are a first groove, a second groove, and a third groove, respectively, and the third groove is disposed between the first groove and the second groove. The detection device further includes a limiting pin 680 and an elastic member 690, an end of the elastic member 690 is fixed to a fixing frame and the other end is connected to the limiting pin 680, and the limiting pin 680 can be clamped into the limiting groove 651.

When the user drives the eccentric roller 650 to rotate through the operating member 620, the limiting pin 680 can move between the first groove, the second groove, and the third groove. When the operating member 620 is at the first position, the limiting pin 680 can be clamped into the first groove. When the operating member 620 is at the second position, the limiting pin 680 can be clamped into the second groove. When the operating member 620 is at the third position, the limiting pin 680 can be clamped into the third groove. After clamped into the limiting groove 651, the limiting pin 680 can limit the operating member 620 to a certain extent to prevent the operating member 620 from rotating accidentally. Of course, a limiting force of the limiting pin 680 on the operating member 620 cannot resist a driving force of the user on the operating member 620.

Still referring to FIG. 10, the riding lawn mower is further provided with a tool interface 610 configured to be connected to an external power supply to charge the power supply device 180. The external power supply may be mains electricity or an external power bank. In some examples, the tool interface 610 and the operating member 620 are both disposed on the front side of the seat 200. The tool interface 610 is disposed below the operating member 620 in the up and down direction. In some examples, the tool interface 610 and at least part of the power supply device 180 are disposed on the front side of the seat 200. The riding lawn mower has the tool interface 610 disposed on the front side of the seat 200, making it convenient for the user to plug and unplug an external connector into and from the tool interface 610. When the user rides the riding lawn mower, the body of the user can shield the tool interface 610 so that the tool interface 610 has a relatively good waterproof effect since water does not easily enter.

The power supply device 180 is charged through the tool interface 610. Besides, the power supply device 180 with power can charge an external electrical device when the tool interface 610 is externally connected to the external electrical device. In some examples, the riding lawn mower further includes a battery management circuit board, and the battery management circuit board is connected to the power supply device 180 to control charge and discharge of the power supply device 180. In some examples, the distance between the tool interface 610 and the battery management circuit board in a front and rear direction is greater than or equal to 0 and less than or equal to 2000 mm. In some examples, the distance between the tool interface 610 and the battery management circuit board in the front and rear direction is greater than or equal to 0 mm and less than or equal to 500 mm. In some examples, the distance between the tool interface 610 and the battery management circuit board in the front and rear direction is greater than or equal to 500 mm and less than or equal to 1500 mm. In some examples, the distance between the tool interface 610 and the battery management circuit board in the front and rear direction is greater than or equal to 1500 mm and less than or equal to 2000 mm. **It** is to be understood that the above distance between the tool interface 610 and the battery management circuit board in the front and rear direction should include the case where the tool interface 610 is located in front of or behind the battery management circuit board.

**In** some examples, referring to FIG. 3, the tool interface 610 is disposed on a sidewall of the control panel 600. **In** some examples, the distance L3 between the tool interface 610 and the lowest point of the steering wheel 510 in the up and down direction is greater than or equal to 0 and less than or equal to 2000 mm. **In** some examples, the distance between the tool interface 610 and the lowest point of the steering wheel 510 in the up and down direction is greater than or equal to 0 and less than or equal to 500 mm. **In** some examples, the distance L3 between the tool interface 610 and the lowest point of the steering wheel 510 in the up and down direction is greater than or equal to 500 mm and less than or equal to 1500 mm. **In** some examples, the distance L3 between the tool interface 610 and the lowest point of the steering wheel 510 in the up and down direction is greater than or equal to 1500 mm and less than or equal to 2000 mm. **In** some examples, the tool interface 610 includes a charging interface and a communication interface, the power supply device 180 may be charged and discharged through the charging interface, and a communication device can be connected through the communication interface.

**In** some examples, the tool interface 610 further includes a detachable sealing member, and the sealing member has at least waterproof and dustproof functions. Optionally, the sealing member is a pad of silica gel.

Still referring to FIG. 10, the front housing assembly 110 includes a rear surface facing the user, and the rear surface is formed with or connected to a storage device 800 including a storage space configured to store an article. The riding lawn mower has the storage device 800 formed on or connected to the rear surface of the front housing assembly 110. Since the rear surface of the front housing assembly 110 faces the user, the user can easily pick up and place articles even when the user is in a working state of riding the riding lawn mower, achieving good user experience and preventing the working efficiency from being affected.

In some examples, the storage device 800 is located on the front side of the support portion in the extension direction of the body 100, making it convenient for the user to pick up and place the articles from and into the storage device 800.

In some examples, the storage device 800 is disposed below the steering operation assembly 500, making it convenient for the user to pick up and place the articles from and into the storage device 800.

In some examples, referring to FIG. 4, the storage device 800 is disposed on the front side of the seat 200, and the distance L2 between the storage device 800 and the seat 200 is greater than or equal to 10 cm and less than or equal to 80 cm. In some examples, the distance L2 between the storage device 800 and the seat 200 is greater than or equal to 30 cm and less than or equal to 50 cm.

In some examples, still referring to FIG. 10, the front housing assembly 110 is further provided with a USB interface 900 electrically connected to the power supply device 180, and the power supply device 180 can charge the external electrical device externally connected to the USB interface 900. In some examples, the distance between the USB interface 900 and the bottom of the storage device 800 is greater than or equal to 0 and less than or equal to 1000 mm. In some examples, the distance between the USB interface 900 and the bottom of the storage device 800 is greater than or equal to 0 and less than or equal to 500 mm. In some examples, the distance between the USB interface 900 and the bottom of the storage device 800 is greater than or equal to 500 mm and less than or equal to 1000 mm. It is to be understood that the distance between the USB interface 900 and the bottom of the storage device 800 should include that the USB interface is disposed above, below, to the left, or to the right of the storage device.

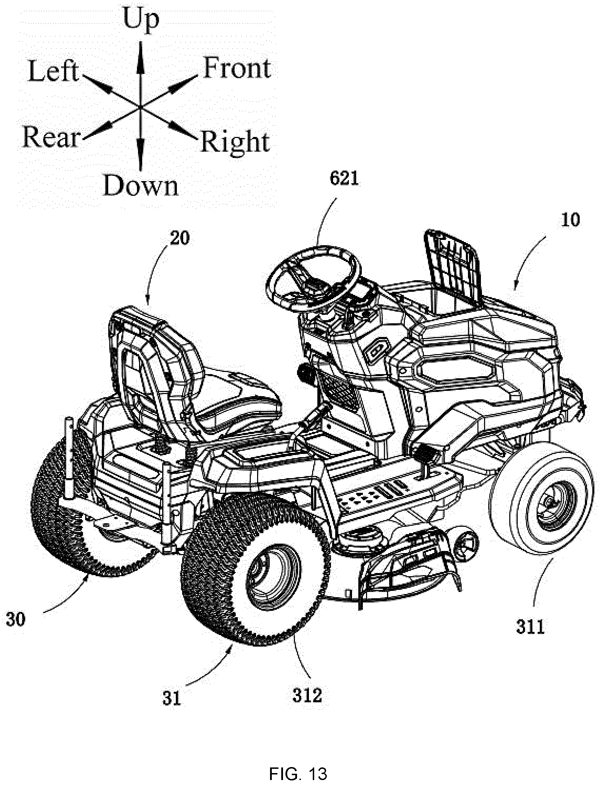

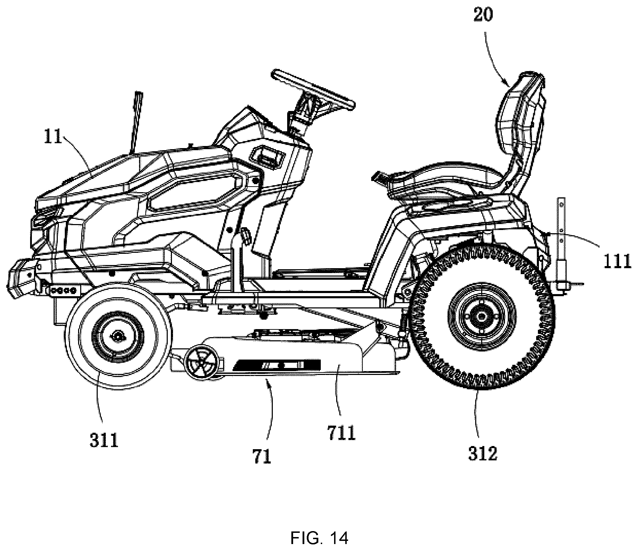

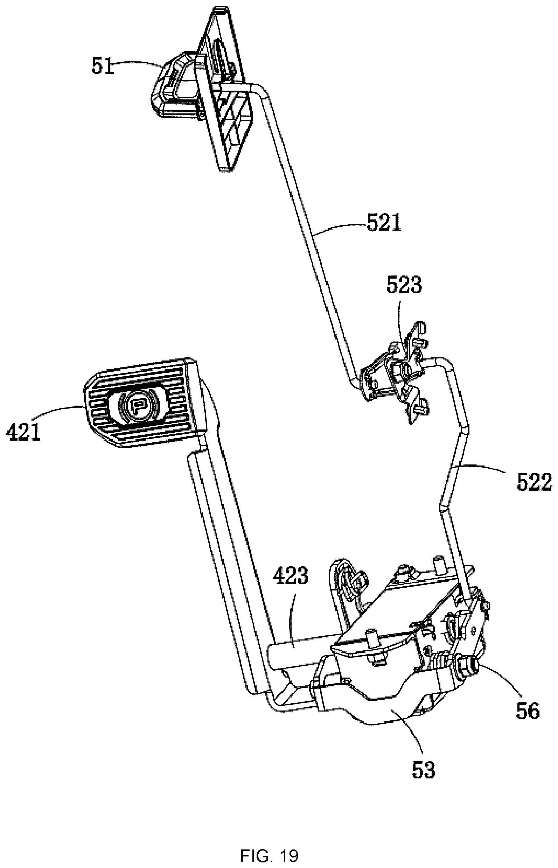

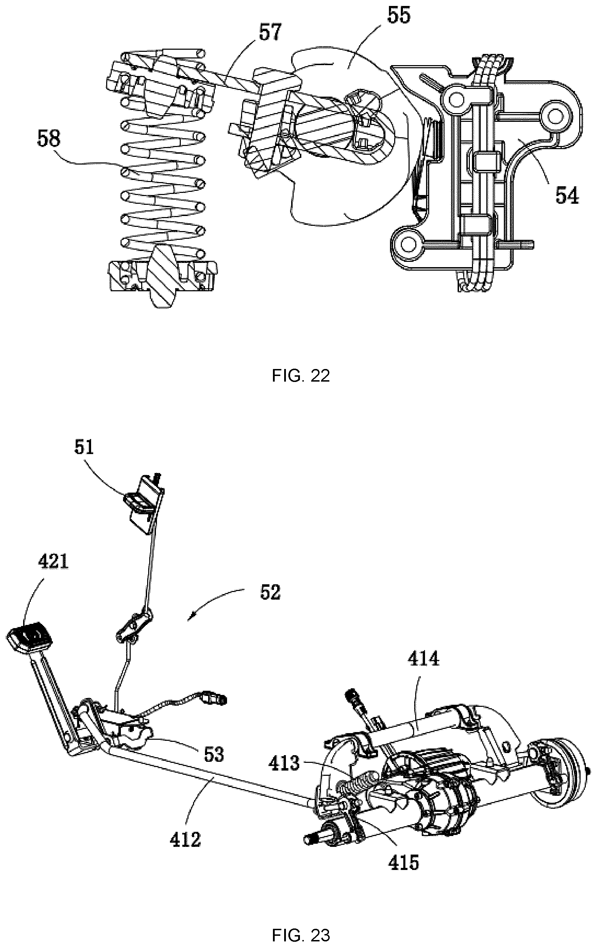

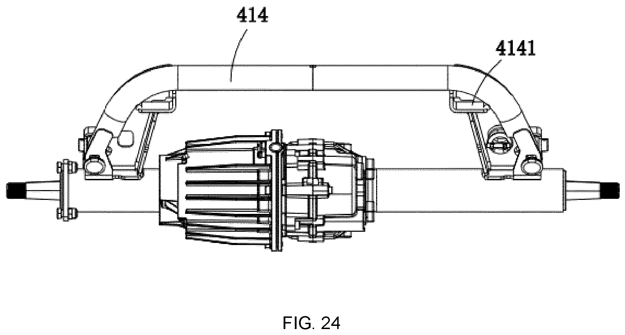

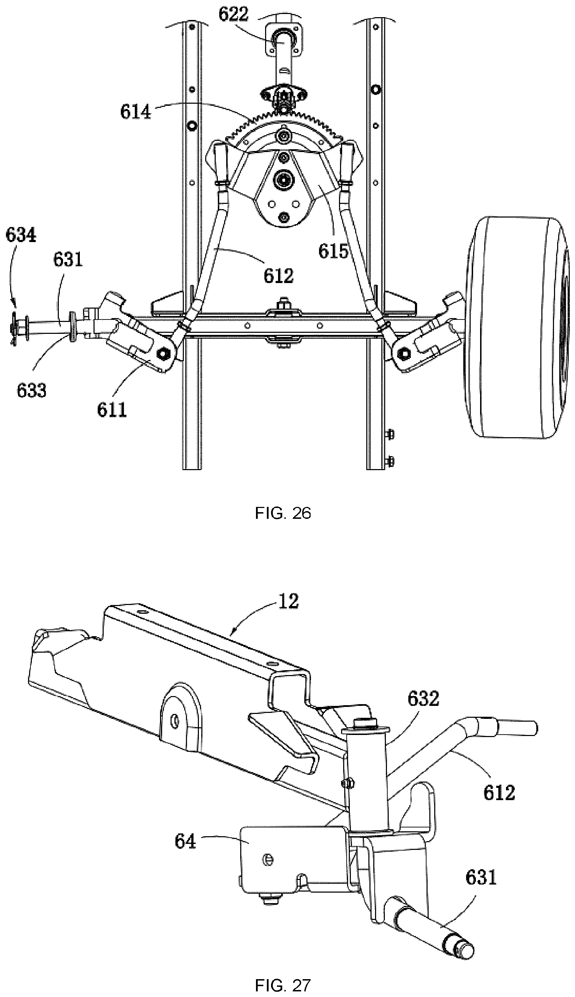

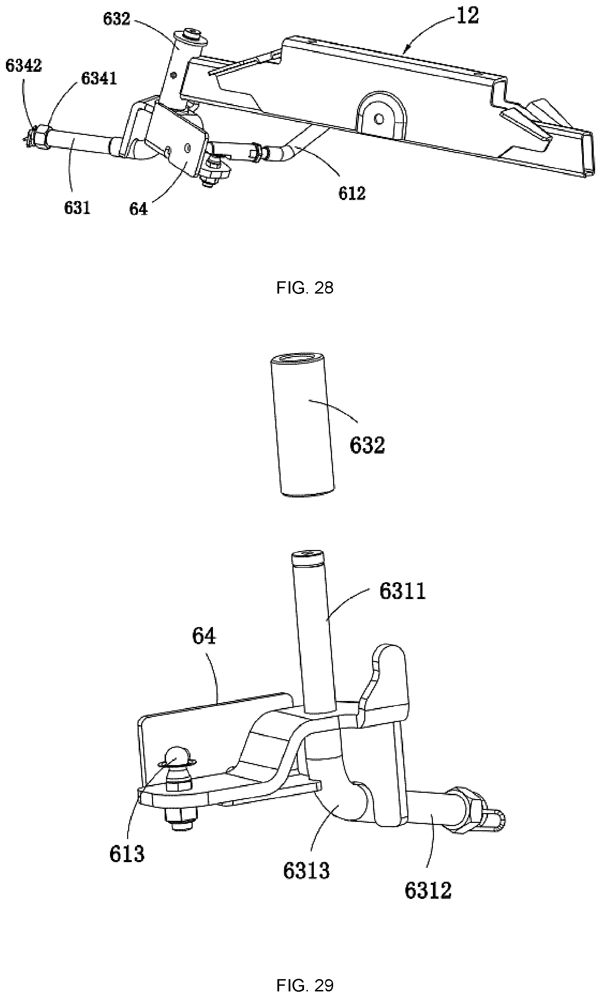

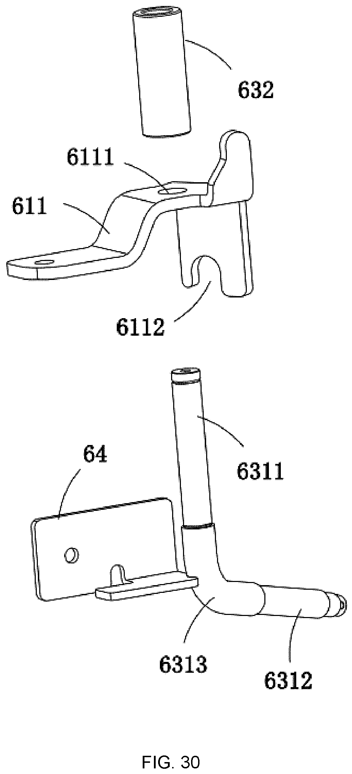

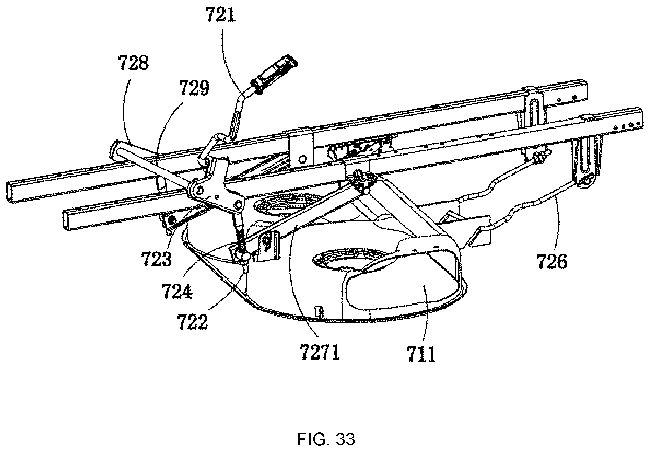

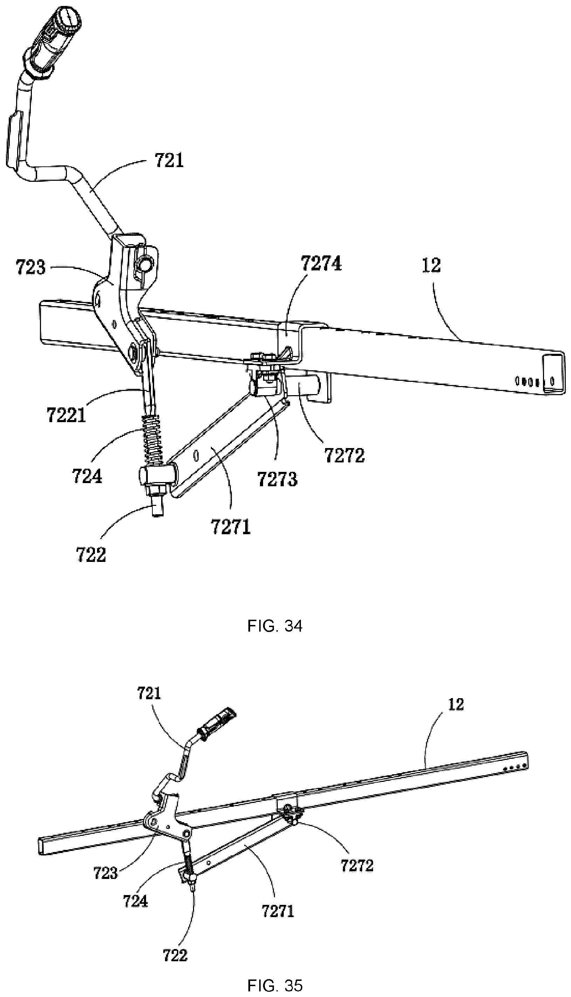

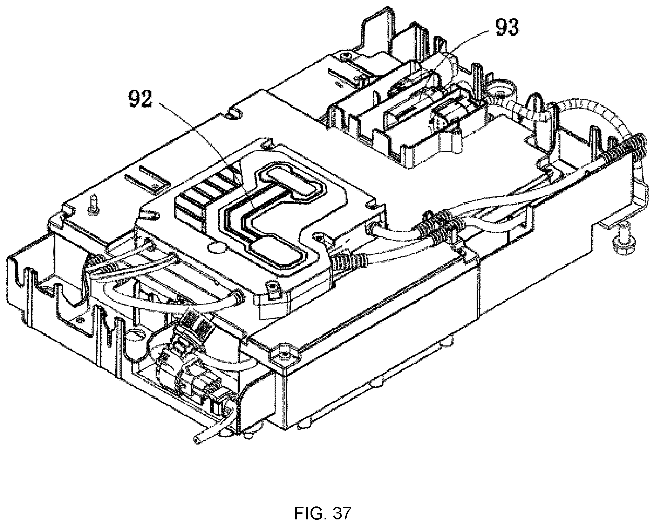

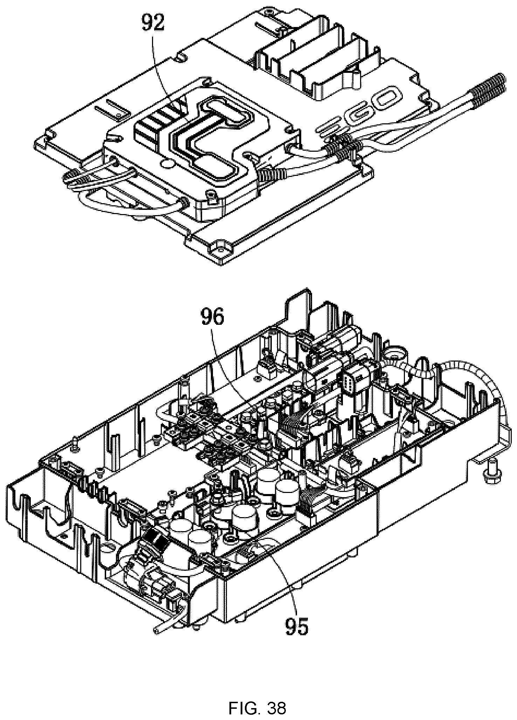

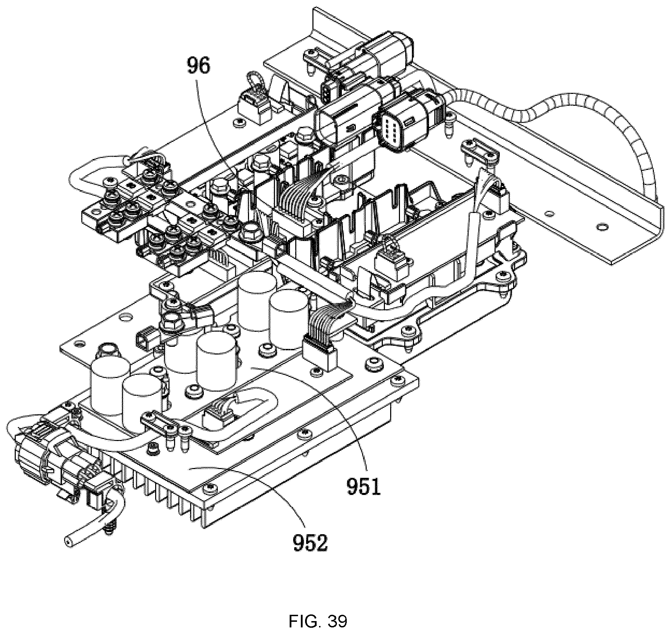

Referring to FIGS. 13 to 39, examples of the present application provide a riding lawn mower which a user can ride on and control to trim a lawn and other vegetation. When the user sits on the riding lawn mower on the ground, it is defined that a direction which the user faces is the front, a direction which the user faces away from is the rear, a direction on the left-hand side of the user is the left, a direction on the right-hand side of the user is the right, a direction towards the ground is down, and a direction away from the ground is up.

The riding lawn mower includes a body 10, a seat 20, a walking mechanism 30, a brake mechanism, a parking assembly 50, a steering mechanism, and a power supply assembly. The body 10 has a support effect and is used for mounting other assemblies. The seat 20 is configured for the user to sit on. The walking mechanism 30 is configured to drive the whole machine to walk. The brake mechanism is configured to brake the walking mechanism 30. The parking assembly 50 is configured for parking. The steering mechanism is configured to steer the whole machine. The power supply assembly provides electrical energy for assemblies of the riding lawn mower so that the riding lawn mower can be used as a power tool and be more environmentally friendly and energy-saving compared with a fuel-powered mower. The body 10 extends basically along a front and rear direction, the body 10 includes a housing 11 and a frame 12, the frame 12 generally includes rails and crossmembers, and the housing 11 covers the frame 12. The housing 11 includes a front cover, an intermediate cover, and a rear cover 111. The walking mechanism 30 includes a walking assembly 31 and a drive assembly for driving the walking assembly 31. The walking assembly 31 includes front wheels 311 and rear wheels 312. It is to be understood that two front wheels 311 and two rear wheels 312 are provided, the two front wheels 311 are connected by a front axle, and the two rear wheels 312 are connected by a rear axle. The radius of the rear wheels 312 is greater than the radius of the front wheels 311. The drive assembly is a motor that drives the rear wheels 312 to rotate. The rear ends of the rear wheels 312 extend backward beyond the rear end of the rear cover 111 to protect the rear cover 111. The rear cover 111 includes a sheet metal part and a plastic part to increase structural strength.

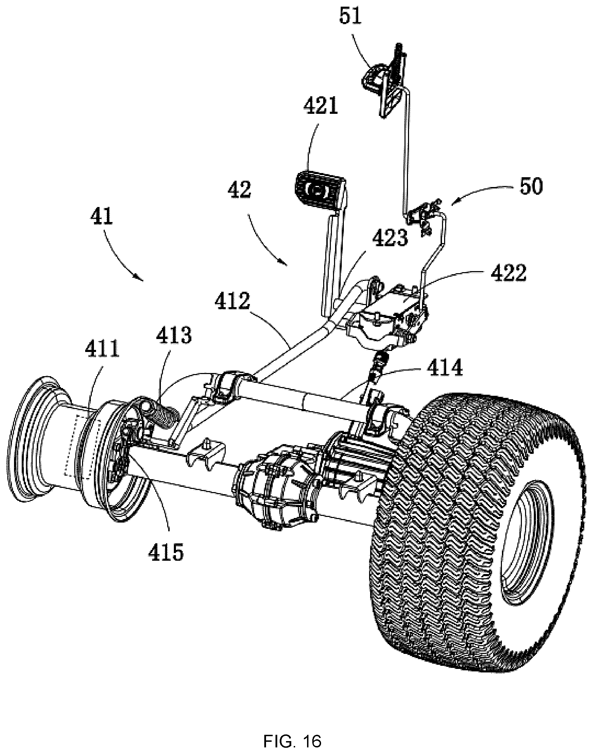

Referring to FIGS. 16 to 24, the brake mechanism includes a brake operation assembly 42 and a brake execution assembly 41. The brake operation assembly 42 includes a brake pedal 421 and a support 422, the support 422 is connected to the body 10, the brake pedal 421 is movably connected to the support 422, and the brake pedal 421 is operated by the user between an initial position and a parking position. The brake execution assembly 41 is connected to the brake pedal 421 and configured to perform a brake action to brake the walking mechanism 30. The brake execution assembly 41 includes a brake drum 411 and a brake pull rod 412, and the brake drum 411 is connected to the walking assembly 31 to reduce a rotational speed of the walking assembly 31. The brake pull rod 412 is connected to the brake pedal 421 and the brake drum 411, and the brake pull rod 412 is configured to drive the brake drum 411 to brake the walking assembly 31 when the brake pedal 421 is operated. The brake pedal 421 is rotatably connected to the support 422. When the user depresses the brake pedal 421, the brake pedal 421 rotates to drive the brake pull rod 412 to move to drive the brake drum 411 into braking.

The brake drum 411 is used as a brake member, which has a long service life and is convenient to maintain. The brake pull rod 412 is connected to the brake pedal 421 and the brake drum 411, and the brake pull rod 412 is configured to drive the brake drum 411 to brake the walking assembly 31 when the brake pedal 421 is operated. The brake drum 411 is connected to the walking assembly 31 to reduce the rotational speed of the walking assembly 31. The brake pull rod 412 is used instead of a wire rope, which has high stability and a long service life. The brake drum 411 is connected to a rear wheel 312.

The brake pedal 421 is connected to the support 422 through a main shaft 423, and the main shaft 423 is fixedly connected to the brake pedal 421 and rotatably connected to the support 422. When the user steps on the brake pedal 421, the brake pedal 421 drives the main shaft 423 to rotate.

The brake execution assembly 41 further includes a pull rod reset 413, and the pull rod reset 413 is connected to the brake pull rod 412 to generate a reset force for resetting the brake pull rod 412. When the pull rod reset 413 drives the brake pull rod 412 to reset, a trigger 55 releases a trigger of an electronic switch 54. The pull rod reset 413 drives the brake pull rod 412 to reset, and the brake pull rod 412 drives the brake pedal 421 to reset to drive the main shaft 423 and the trigger 55 to reset so that the trigger 55 releases the trigger of the electronic switch 54.

The brake execution assembly 41 further includes a swing link 414 and a rocker arm 415, the swing link 414 is rotatably connected to the body 10 and resiliently connected to the brake pull rod 412, and the brake pull rod 412 can drive the swing link 414 to rotate. An end of the rocker arm 415 is connected to the brake drum 411 and the other end is movably connected to the swing link 414, and the swing link 414 can drive the rocker arm 415 to rotate. When the brake pedal 421 is depressed, the rotation of the brake pedal 421 drives the brake pull rod 412 to be pulled forward, the pull rod reset 413 is compressed, and the brake pull rod 412 drives the swing link 414 to rotate so that the rocker arm 415 swings and acts on the brake drum 411 to achieve braking.

The swing link 414 is U-shaped, reinforcing plates 4141 are provided at two ends of the swing link 414, and the reinforcing plates 4141 are located at bent parts of the swing link 414. The swing link 414 is a pipe or rod bent as a whole to improve torsional strength. The reinforcing plates 4141 further improve force transmission strength. In this example, a round pipe is bent into the swing link 414, and the round pipe may have a diameter of 32 mm and a wall thickness of 3 mm, to reduce stress at torque transmission positions, improve the overall stiffness, and reduce deformation.

The brake pull rod 412 penetrates through the swing link 414, a fixing member is provided at an end of the brake pull rod 412, and the pull rod reset 413 is sandwiched between the swing link 414 and the fixing member. When the brake pedal 421 is depressed, the rotation of the brake pedal 421 drives the brake pull rod 412 to be pulled forward, and the fixing member and the swing link 414 squeeze the pull rod reset 413 so that the pull rod reset 413 is compressed.

In this example, the brake pull rod 412 is located on the outer side of the body 10, facilitating mounting, detachment, and replacement, avoiding interference with a cutting assembly 71, a control box, and the like, and improving space utilization.

The support 422 is suspended on the body 10, facilitating mounting and detachment.

The support 422 is provided with ears on the periphery and fixed to the body 10 through the ears. The swing link 414 is provided with a platen and fixed to the body 10 through the platen. The ears and the platen may be connected to the body 10 by bolts.

The parking assembly 50 includes a locking member 53, the locking member 53 is rotatably connected to the support 422, and the locking member 53 can lock the brake pedal 421 at the parking position. The locking member 53 of the parking assembly 50 is rotatably connected to the support 422 of the brake operation assembly 42 so that the parking assembly 50 and the brake operation assembly 42 are integrated into a whole, facilitating simultaneous mounting and detachment, improving integrity and assembly efficiency, and saving space occupied.

The brake pedal 421 is provided with a locking slot 4211, a locking hook 531 is formed at an end of the locking member 53, and the locking hook 531 can be inserted into the locking slot 4211. The locking slot 4211 mates with the locking hook 531 so that the locking member 53 locks the brake pedal 421 more stably, improving positioning and locking accuracy.

In this example, the brake pedal 421 includes a body of the brake pedal 421 and an adaptor plate connected to the body of the brake pedal 421, the adaptor plate is U-shaped, the locking slot 4211 is opened at the bottom of the adaptor plate, the main shaft 423 penetrates through two side arms of the adaptor plate, and an end of the brake pull rod 412 is rotatably connected to the adaptor plate.

The locking member 53 is connected to the support 422 through a locking shaft 56, and a torsion spring is provided on the locking shaft 56. The locking member 53 is rotatable between a locking position and an unlocking position. When the brake pedal 421 is at the parking position, the locking member 53 is rotated to the locking position so that the locking hook 531 is inserted into the locking slot 4211.

In this example, the locking member 53 is U-shaped, the locking member 53 includes a first side arm, a connecting arm, and a second side arm connected in sequence, the locking shaft 56 penetrates through the first side arm and the second side arm, and the locking hook 531 is formed at an end of the first side arm.

The parking assembly 50 further includes a parking toggle 51 and a parking switch lever 52, an end of the locking member 53 is rotatably connected to the parking switch lever 52, and the parking toggle 51 can drive, through the parking switch lever 52, the locking member 53 to rotate between the locking position and the unlocking position. The parking switch lever 52 is hinged to the second side arm of the locking member 53.

The body 10 is provided with an instrument casing, and the parking toggle 51 is disposed on a side of the instrument casing and slidably connected to the instrument casing. An operator may toggle the parking toggle 51 by hand. It is to be understood that the parking toggle 51 is resiliently connected to the instrument casing to facilitate the reset of the parking toggle 51.

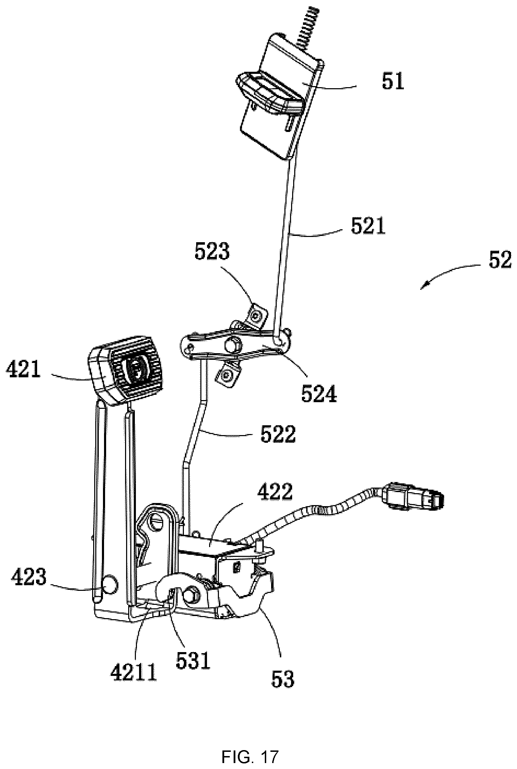

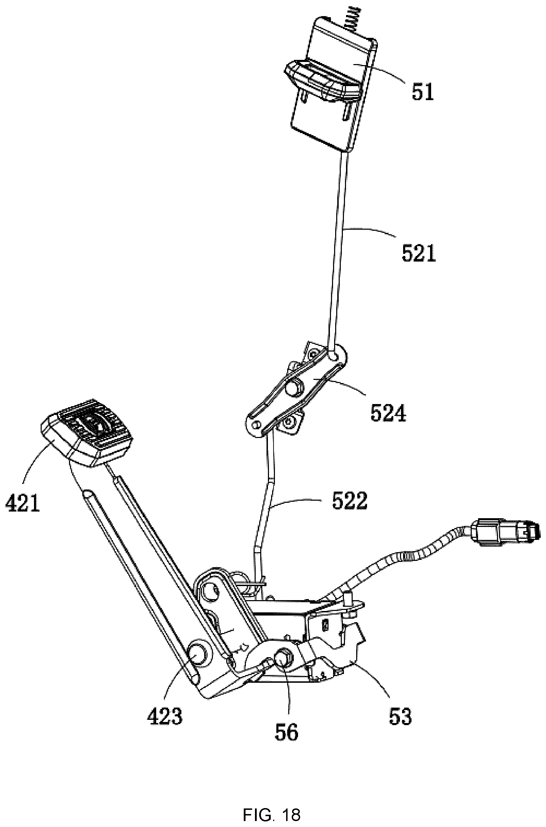

The parking switch lever 52 includes a first link 521, a second link 522, and a connection assembly, where the connection assembly includes a fixed rod 523 and a movable rod 524, the fixed lever 523 is fixedly connected to the body 10, a body of the movable rod 524 is rotatably connected to the fixed rod 523, an end of the movable rod 524 is hinged to the first link 521, and the other end of the movable rod 524 is hinged to the second link 522. The movable rod 524, the fixed rod 523, and the first link 521 and the second link 522 hinged to two ends of the movable rod 524 form a lever-like structure. As shown in FIG. 18, during an upward slide of the parking toggle 51, the first link 521 is pulled upward so that the movable rod 524 rotates relative to the fixed rod 523, and the second link 522 is pressed downward so that the locking member 53 rotates around the locking shaft 56, and the locking hook 531 is inserted into the locking slot 4211. As shown in FIG. 17, during a downward slide of the parking toggle 51, the first link 521 is pressed downward so that the movable rod 524 rotates relative to the fixed rod 523, and the second link 522 is pulled upward so that the locking member 53 rotates around the locking shaft 56, and the locking hook 531 is disengaged from the locking slot 4211.

The parking assembly 50 further includes the electronic switch 54 and the trigger 55, the electronic switch 54 is electrically connected to the drive assembly to control the drive assembly to enter a parking mode, and the trigger 55 is connected to the brake pedal 421. The trigger 55 triggers the electronic switch 54 when the brake pedal 421 is depressed to the parking position. The brake pedal 421 mates with the locking member 53 to form mechanical parking, and the electronic switch 54 mates with the trigger 55 to form electronic parking. The mechanical parking and the electronic parking are combined to achieve a relatively good parking effect.

The trigger 55 is connected to the main shaft 423. During rotation, the main shaft 423 drives the trigger 55 to rotate. The trigger 55 is cam-shaped. As the trigger 55 rotates, a larger-diameter portion of the trigger 55 can abut against the electronic switch 54 to trigger the electronic switch 54.

In this example, the support 422 is box-shaped, the locking member 53 is located on the outer side of the support 422, and the electronic switch 54 and the trigger 55 are both located on the inner side of the support 422. It is to be understood that the support 422 has a fully enclosed sealed structure to improve waterproof and dustproof performance.

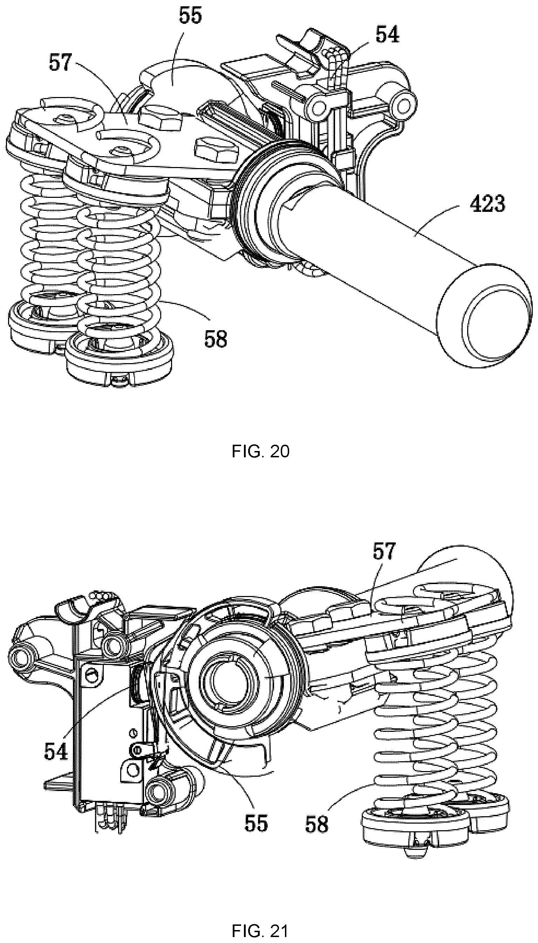

Referring to FIGS. 20 to 22, the parking assembly 50 further includes a force transmission plate 57 and a main shaft reset 58 which are disposed in the support 422, where an end of the force transmission plate 57 is fixedly connected to the main shaft 423, and the other end of the force transmission plate 57 is connected to the main shaft reset 58. When the brake pedal 421 is depressed, the main shaft 423 rotates to drive the force transmission plate 57 to rotate, and the force transmission plate 57 compresses a spring. When the brake pedal 421 is released, the force transmission plate 57 resets under the action of the main shaft reset 58 so that the main shaft 423 resets and drives the trigger 55 to reset.

When the brake pedal 421 is released, the main shaft reset 58 and the pull rod reset 413 act simultaneously so that the brake pedal 421, the main shaft 423, and the brake pull rod 412 reset accurately. The main shaft reset 58 and the pull rod reset 413 may each be a biasing element such as a compression spring or a tension spring. In this example, a reset function is implemented in the form of the compression spring. Those skilled in the art may also adopt the form of the tension spring and make adaptive modifications to a mounting structure to implement the reset function.

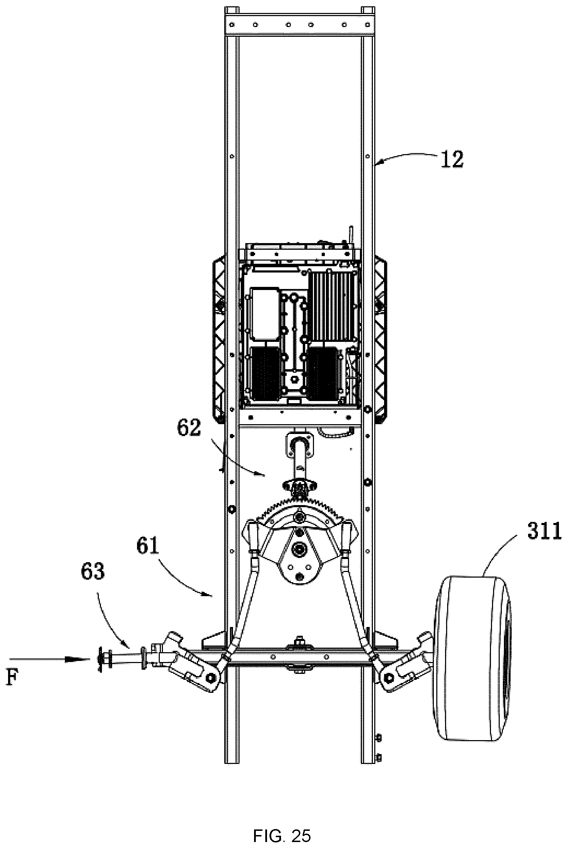

Referring to FIGS. 25 to 30, the front wheel 311 is connected to the frame 12 through a kingpin assembly 63, the kingpin assembly 63 includes a kingpin 631 connected to the front wheel 311, and the kingpin 631 is rotatably connected to the body 10. When the front wheel 311 needs to be driven to turn, the kingpin 631 is driven to rotate so that the front wheel 311 can turn.

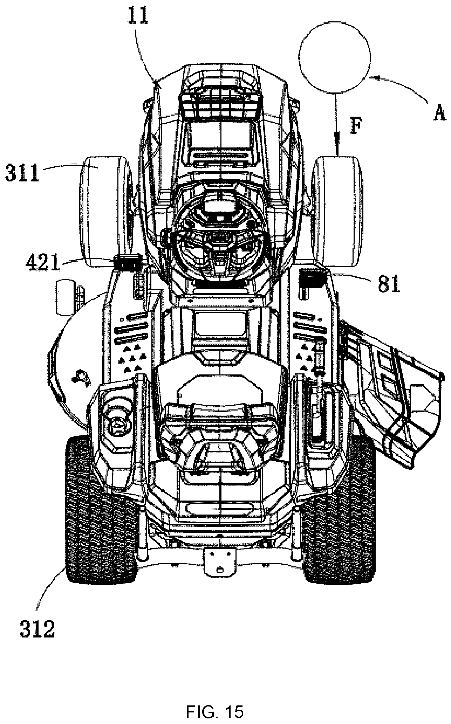

The steering mechanism includes a steering execution assembly 61 and a steering operation member 62, the steering execution assembly 61 includes a steering knuckle arm 611 connected to the kingpin 631 to drive the kingpin 631 to rotate, and the steering operation member 62 is operated by the user to drive the steering knuckle arm 611. A guard device is provided on the steering knuckle arm 611 on a side of the kingpin 631. The kingpin 631 can withstand a maximum impact force greater than or equal to 5000 N and less than or equal to 7000 N along a first direction F. In some examples, the kingpin 631 can withstand a maximum impact force greater than or equal to 5500 N and less than or equal to 6500 N along the first direction F. The guard device protects and reinforces the kingpin 631 so that the kingpin 631 can withstand an external impact, increasing structural strength, reducing a risk of breakage, increasing a service life, and improving safety. The maximum impact force is tested by the method shown in FIG. 15, where post A with a diameter of approximately 300 mm is placed in front of a wheel, and the riding lawn mower impacts the post at a speed of 10 km/h. During the impact test, when the wheel is broken, the maximum impact force the wheel withstands ranges from 5000 N to 7000 N.

The kingpin 631 includes a longitudinal portion 6311, a transverse portion 6312, and a bent portion 6313 connecting the longitudinal portion 6311 to the transverse portion 6312, where the longitudinal portion 6311 and the transverse portion 6312 both penetrate through the steering knuckle arm 611. The steering knuckle arm 611 supports the kingpin 631, and the longitudinal portion 6311 and the transverse portion 6312 both penetrate through the steering knuckle arm 611 so that the steering knuckle arm 611 supports two portions of the kingpin 631, and the torsional resistance between the steering knuckle arm 611 and the kingpin 631 is greatly improved.

The steering knuckle arm 611 is provided with a first mounting hole 6111 and a first mounting groove 6112, the longitudinal portion 6311 penetrates through the first mounting hole 6111, and the transverse portion 6312 penetrates through the first mounting groove 6112. The angle between the longitudinal portion 6311 and the transverse portion 6312 may be greater than or equal to 90°.

The steering execution assembly 61 further includes a steering pull rod 612 and a joint bearing 613, and the steering pull rod 612 is connected to the steering knuckle arm 611 through the joint bearing 613. The joint bearing 613 enables the steering pull rod 612 to drive the steering knuckle arm 611 to rotate, achieving smooth rotation between the steering pull rod 612 and the steering knuckle arm 611. The joint bearing 613 is a ball joint bearing so that the steering knuckle arm 611 can rotate within 360°.

The guard device includes a guard 64 disposed on the outer side of the joint bearing 613, and the guard 64 shields the joint bearing 613 in a direction of the impact force. The guard 64 can not only protect the joint bearing 613 from a hit of a hard object but also reinforce the steering knuckle arm 611 to increase structural strength.

The guard 64 and the steering knuckle arm 611 may be integrally formed or may be detachably connected through a bolt.

A first plane extending perpendicular to the first direction F is defined, and a projection of the joint bearing 613 on the first plane is located within a projection of the guard 64 on the first plane so that the guard 64 can provide all-round protection for the joint bearing 613.

An engaging groove is defined on the guard 64, and the bent portion 6313 is inserted into the engaging groove. The longitudinal portion 6311 and the transverse portion 6312 of the kingpin 631 are limited by the steering knuckle arm 611, both of which penetrate through the steering knuckle arm 611.

The kingpin assembly 63 further includes a sleeve 632, the sleeve 632 is sleeved on the kingpin 631, the sleeve 632 is fixedly connected to the body 10, and the kingpin 631 penetrates through the sleeve 632 and is rotatably connected to the sleeve 632. The sleeve 632 is sleeved on the longitudinal portion 6311. When the steering pull rod 612 drives the steering knuckle arm 611 to rotate, the steering knuckle arm 611 and the kingpin 631 simultaneously rotate about an axis of the sleeve 632, and the front wheel 311 connected to the transverse portion 6312 of the kingpin 631 turns.

A limiting portion 633 and a retaining member 634 are provided on the kingpin 631, and the front wheel 311 is disposed between the limiting portion 633 and the retaining member 634. The limiting portion 633 may be a step formed between the transverse portion 6312 and the bent portion 6313 or a limiting ring fixed on the transverse portion 6312. The retaining member 634 is disposed at an end of the transverse portion 6312 facing away from the bent portion 6313 to prevent the front wheel 311 from falling off. The retaining member 634 includes a nut 6341 and a locking pin 6342, the nut 6341 is threadedly connected to the kingpin 631, a washer is provided between the front wheel 311 and the nut 6341, and the locking pin 6342 is disposed on the outer side of the nut 6341. The nut 6341 mates with the locking pin 6342 to achieve a very good loosening effect. The locking pin 6342 is a cotter pin, the kingpin 631 is provided with a pinhole, and locking pin 6342 penetrates through the pinhole.

The two front wheels 311 are disposed, and one steering pull rod 612, one steering knuckle arm 611, and one kingpin 631 are provided correspondingly for each front wheel 311. The front axle between the two front wheels 311 is welded to the frame 12. The front axle is provided with a flange, and the flange is welded to the body 10, increasing a contact area, facilitating machining and production, and improving the collision strength of the front axle.

The steering operation member 62 includes a steering wheel 621 and a support rod 622. The steering execution assembly 61 further includes a steering tooth disk 614 and a connecting plate 615. The support rod 622 is connected to the steering wheel 621 and the steering tooth disk 614, the connecting plate 615 is fixedly connected to the steering tooth disk 614, and the steering pull rod 612 is connected to the connecting plate 615. The user operates the steering wheel 621, and the support rod 622 transmits a steering force applied by the user to the steering wheel 621 from the steering wheel 621 to the steering tooth disk 614. A gear is fixedly mounted at an end of the support rod 622 connected to the steering wheel 621, and a gear ring meshing with the gear is provided inside the steering wheel 621. When the user rotates the steering wheel 621, the gear ring of the steering wheel 621 drives the gear of the support rod 622 to rotate synchronously to drive the steering tooth disk 614 to rotate, and the steering tooth disk 614 drives the steering knuckle arm 611 through the steering pull rod 612.

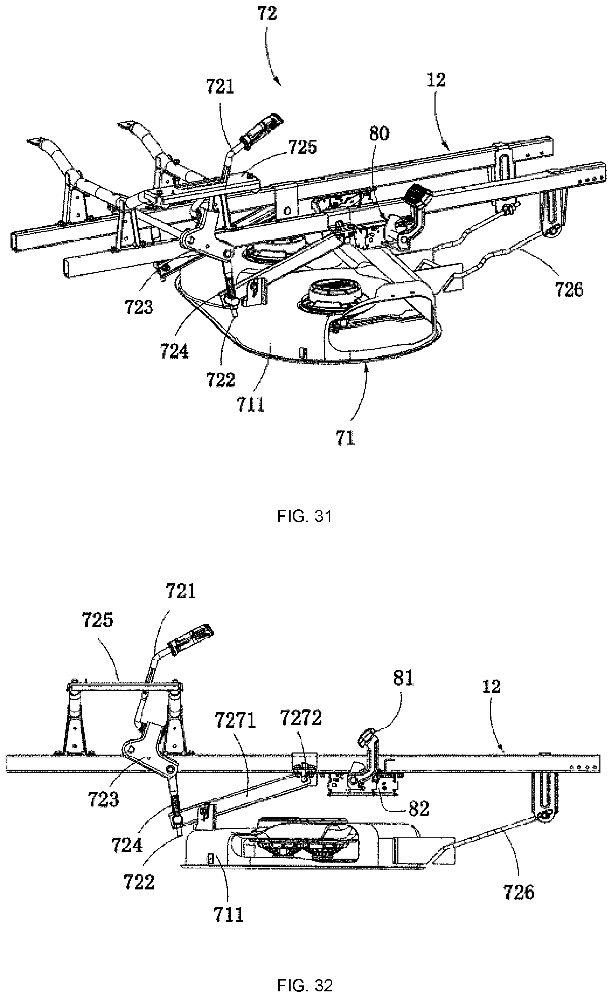

Referring to FIGS. 31 to 35, the riding lawn mower further includes the cutting assembly 71 disposed below the body 10. The cutting assembly 71 includes a cutter disk 711, a mowing element 400, and a motor. The mowing element 400 is configured to cut vegetation when rotating at a high speed. For example, the mowing element 400 is a blade. The cutter disk 711 surrounds a mowing space configured to accommodate at least part of the mowing element 400, that is to say, the mowing element 400 is at least partially accommodated in the cutter disk 711. The motor is configured to drive the mowing element 400 to rotate.

The riding lawn mower further includes a height adjustment assembly 72 connected to the body 10 and configured to adjust the height of the cutting assembly 71 to adapt to different cutting conditions. The height adjustment assembly 72 is connected to the cutter disk 711. The height adjustment assembly 72 includes an adjustment rod 721, a linkage rod 722, and an adapter base 723, the adapter base 723 is rotatably connected to the frame 12, an end of the adjustment rod 721 is connected to the adapter base 723, the other end of the adjustment rod 721 is operated by the user, an end of the linkage rod 722 is connected to the adapter base 723, and the other end of the linkage rod 722 is connected to the cutter disk 711. The adjustment rod 721 and the linkage rod 722 are connected to the same adapter base 723, reducing the number of parts, increasing structural strength, and reducing a cost.

The linkage rod 722 is slidably connected to the cutter disk 711, the linkage rod 722 penetrates through a linkage reset 724, a flat position 7221 is formed at an end of the linkage rod 722, and the linkage reset 724 abuts against the flat position 7221. The flat position 7221 on the linkage rod 722 limits the linkage reset 724, further reducing the number of parts and the cost. The linkage rod 722 is formed with the flat position 7221 by using a round steel flattening process. A step at the flat position 7221 can limit the linkage reset 724 without adding another part. The linkage reset 724 may be a spring.

The height adjustment assembly 72 further includes a gear member 725 including multiple gears and configured to limit the adjustment rod 721 to a preset gear. When the user operates the adjustment rod 721, the adjustment rod 721 can move to different preset gears relative to the gear member 725. During movement, the adjustment rod 721 can drive the adapter base 723 to rotate so that the linkage rod 722 drives the cutter disk 711 to change in height, and thus the cutter disk 711 has different cutting heights.

An end of the cutter disk 711 is connected to the body 10 through hanger rods 726, the other end of the cutter disk 711 is connected to the body 10 through lifting arms 7271, the lifting arms 7271 are rotatably connected to the body 10, the cutter disk 711 is rotatably connected to the lifting arms 7271, and the linkage rod 722 is slidably connected to the lifting arm 7271. In the sliding process of the linkage rod 722, the degree to which the linkage reset 724 is compressed changes so that the lifting arm 7271 rotates to drive the cutter disk 711 to change in height.

The lifting arm 7271 is rotatably connected to the body 10 through a lifting shaft 7272, and the lifting shaft 7272 is supported at two points to reduce eccentric loading and improve stability and rigidity. A first mounting plate 7273 and a second mounting plate 7274 are provided on the frame 12. An end of the lifting shaft 7272 is connected to the first mounting plate 7273, and the other end of the lifting shaft 7272 is connected to the second mounting plate 7274 so that two positions of the lifting shaft 7272 are supported to form dual-point support. The lifting arm 7271 is sleeved on the lifting shaft 7272 and can rotate around the lifting shaft 7272. The first mounting plate 7273 and the second mounting plate 7274 are detachably connected to be convenient to assemble.

In this example, two lifting arms 7271 are provided, and the two lifting arms 7271 are spaced apart, improving structural strength and rigidity and ensuring a force balance. Accordingly, two linkage rods 722 are provided, and each lifting arm 7271 is connected to one linkage rod 722. The height adjustment assembly 72 further includes a linkage base 728 and a linkage shaft 729, the linkage base 728 is rotatably connected to the frame 12, and the linkage base 728 is connected to the adapter base 723 through the linkage shaft 729. During rotation, the adapter base 723 drives the linkage base 728 to rotate so that the two lifting arms 7271 can move synchronously.

The riding lawn mower further includes a throttle assembly 80 mounted on the body 10, for example, located at the bottom of the frame 12. The throttle assembly 80 includes a throttle pedal 81 and a mounting box 82, the throttle pedal 81 is rotatably connected to the mounting box 82, and the mounting box 82 is detachably connected to the frame 12, facilitating mounting, detachment, and replacement. The mounting box 82 has a fully enclosed sealed structure to improve waterproof and dustproof performance. An anti-slip is provided on the throttle pedal 81 to prevent slipping.

The mounting box 82 is suspended on the body 10, facilitating mounting and detachment. The mounting box 82 is provided with ears on the periphery and fixed to the body 10 through the ears. The ears may be connected to the body 10 by bolts.

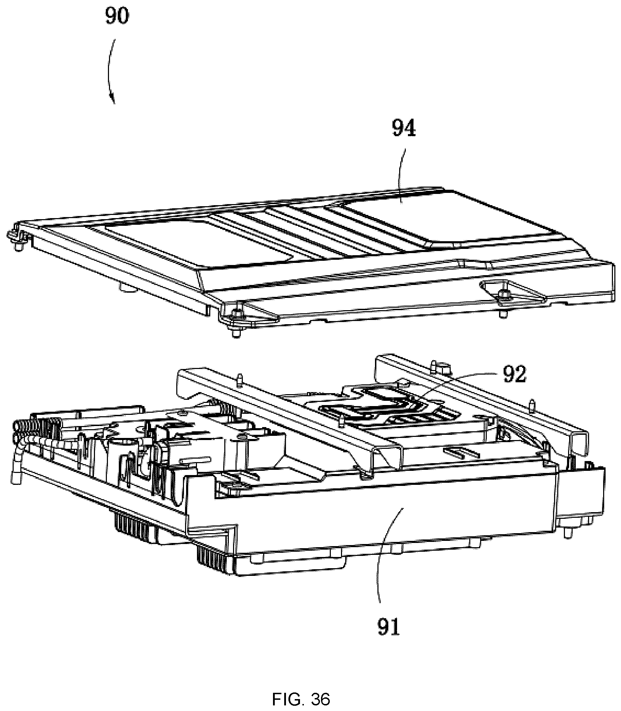

Referring to FIGS. 36 to 39, the riding lawn mower further includes a control assembly 90 including an electric control box 91 and a fuse box 92, where the fuse box 92 is integrated on the electric control box 91 to improve integration and structural compactness. The fuse box 92 is detachably connected to the electric control box 91, facilitating maintenance and replacement. To replace a fuse, the electric control box 91 does not need to be opened to prevent components in the electric control box 91 from being affected.

A wiring harness connector 93 is integrated on the electric control box 91 to improve space utilization and the reliability of fixing the wiring harness connector 93. The wiring harness connector 93 is disposed above the electric control box 91. A magnetic ring of an electromagnetic compatibility (EMC) suppression device is located outside the electric control box 91 and integrated on the electric control box 91 through a fixing structure to facilitate the overall replacement and fixation.

The control assembly 90 further includes a housing cover 94 connected to the electric control box 91 to cover components such as the wiring harness connector 93 and the fuse box 92 to ensure integrity and safety.

Several control boards 95 are arranged in the electric control box 91. To connect several independent control boards 95, an integrated distribution box 96 is adopted, facilitating the centralized protection of ends of multiple connectors, facilitating wiring, and improving reliability. For example, the integrated distribution box 96 is disposed at the middle position of the electric control box 91, and the control boards 95 are distributed on two sides of the integrated distribution box 96.

The control board 95 has a double-layer structure, the upper layer is a capacitor plate 951, and the lower layer is a power plate 952. The capacitor plate 951 is fixed on the power plate 952 by fasteners to improve space utilization. Large-sized capacitors can be selected to improve thermal resistance. The capacitors are arranged in correspondence with three-phase metal-oxide-semiconductor field-effect transistors (MOSFETs) to ensure a more stable power supply.

The basic principles, main features, and advantages of this application are shown and described above. It is to be understood by those skilled in the art that the aforementioned examples do not limit the present application in any form, and all technical solutions obtained through equivalent substitutions or equivalent transformations fall within the scope of the present application.

## Claims

1. A riding lawn mower, comprising:
a seat for a user to sit on;
a body supporting the seat;
a chassis mounted to the body;
a mowing element disposed at least partially in an accommodation space formed by the chassis;
a steering operation assembly configured for the user to operate to control a turn of the riding lawn mower;
a power supply device configured to provide a power supply to the riding lawn mower; and
a tool interface configured to be connected to an external power supply to charge the power supply device;
wherein the tool interface and at least part of the power supply device are disposed on a front side of the seat.

2. The riding lawn mower of claim 1, further comprising a control panel, wherein the body comprises a front housing assembly, and the control panel and the steering operation assembly are disposed between the seat and the front housing assembly.

3. The riding lawn mower of claim 1, wherein the steering operation assembly comprises a steering wheel configured for the user to operate to control a traveling direction of the riding lawn mower, and a distance L3 between the tool interface and a lowest point of the steering wheel in an up and down direction is greater than or equal to 0 and less than or equal to 2000 mm.

4. The riding lawn mower of claim 2, wherein the tool interface is disposed on a sidewall of the control panel.

5. The riding lawn mower of claim 1, wherein the tool interface comprises a detachable sealing member, and the sealing member has waterproof and dustproof functions.

6. The riding lawn mower of claim 1, wherein the tool interface comprises a charging interface and a communication interface.

7. The riding lawn mower of claim 1, wherein in a case where the tool interface is connected to an external electrical device, the power supply device is configured to charge the external electrical device.

8. The riding lawn mower of claim 1, further comprising a battery management circuit board connected to the power supply device and configured to control charge and discharge of the power supply device.

9. The riding lawn mower of claim 8, wherein a distance between the tool interface and the battery management circuit board in a front and rear direction is greater than or equal to 0 and less than or equal to 2000 mm.

10. The riding lawn mower of claim 1, further comprising an operating member configured to control the riding lawn mower to switch between a forward state and a reverse state.

11. The riding lawn mower of claim 10, wherein the operating member has an operating portion, and a distance L1 between the operating portion and a lowest point of a steering wheel in an up and down direction is greater than or equal to 0 and less than or equal to 1500 mm.

12. The riding lawn mower of claim 2, wherein the front housing assembly comprises a rear surface facing the user, and the rear surface is formed with or connected to a storage device configured to store an article.

13. The riding lawn mower of claim 12, wherein the front housing assembly is further provided with a Universal Serial Bus (USB) interface electrically connected to the power supply device, and the power supply device is configured to charge an external electrical device externally connected to the USB interface.

14. The riding lawn mower of claim 13, wherein a distance between the USB interface and a bottom of the storage device is greater than or equal to 0 and less than or equal to 1000 mm.

15. The riding lawn mower of claim 1, wherein the power supply device comprises at least two battery packs, each of which has energy of greater than or equal to 0.1 kW·h.

16. A riding lawn mower, comprising:
a seat for a user to sit on;
a body supporting the seat;
a chassis mounted to the body;
a mowing element disposed at least partially in an accommodation space formed by the chassis;
a steering operation assembly comprising a steering wheel configured for the user to operate to control a turn of the riding lawn mower;
a power supply device disposed at least partially on a front side of the seat and configured to provide a power supply to the riding lawn mower; and
a tool interface configured to be connected to an external power supply to charge the power supply device;
wherein a distance L3 between the tool interface and a lowest point of the steering wheel in an up and down direction is greater than or equal to 0 and less than or equal to 2000 mm.

17. The riding lawn mower of claim 16, wherein the distance L3 between the tool interface and the lowest point of the steering wheel in the up and down direction is greater than or equal to 500 mm and less than or equal to 1500 mm.

18. The riding lawn mower of claim 16, further comprising a control panel, wherein the tool interface is disposed on a sidewall of the control panel.

19. A riding lawn mower, comprising:
a seat for a user to sit on;
a body supporting the seat;
a chassis mounted to the body;
a mowing element disposed at least partially in an accommodation space formed by the chassis;
an operating member configured to control the riding lawn mower to switch between a forward state and a reverse state;
a power supply device configured to provide a power supply to the riding lawn mower; and
a tool interface configured to be connected to an external power supply to charge the power supply device;
wherein the tool interface and the operating member are disposed on a front side of the seat; and in an up and down direction, the tool interface is disposed below the operating member.

20. The riding lawn mower of claim 19, wherein the tool interface comprises a detachable sealing member, and the sealing member has waterproof and dustproof functions.
